(19) Europäisches Patentamt
European Patent Office
Office européen des brevets

(11) EP 0 523 660 B1

(12) # EUROPÄISCHE PATENTSCHRIFT

(45) Veröffentlichungstag und Bekanntmachung des Hinweises auf die Patenterteilung:
**05.03.1997 Patentblatt 1997/10**

(51) Int Cl.6: **C08G 77/50**, C09D 183/14, C08L 83/14

(21) Anmeldenummer: **92112080.4**

(22) Anmeldetag: **15.07.1992**

(54) **Alkenylgruppen aufweisende Siloxancopolymere, deren Herstellung und Verwendung**

Alkenyl group containing siloxane copolymers, their preparation and their use

Polysiloxane-copolymères ayant des groupes alkényles, leur préparation et leur emploi

(84) Benannte Vertragsstaaten:
**AT BE CH DE ES FR GB IT LI NL SE**

(30) Priorität: **15.07.1991 DE 4123423**

(43) Veröffentlichungstag der Anmeldung:
**20.01.1993 Patentblatt 1993/03**

(73) Patentinhaber: **WACKER-CHEMIE GMBH**
**D-81737 München (DE)**

(72) Erfinder:
- **Herzig, Christian, Dr.**
  **W-8221 Taching am See (DE)**
- **Deubzer, Bernward, Dr.**
  **W-8263 Burghausen (DE)**
- **Huettner, David, Dr.**
  **Tecumseh, Michigan 49286 (DE)**

(56) Entgegenhaltungen:
**EP-A- 0 414 938**
**EP-A- 0 439 777**
**EP-A- 0 439 778**

Bemerkungen:
Die Akte enthält technische Angaben, die nach dem Eingang der Anmeldung eingereicht wurden und die nicht in dieser Patentschrift enthalten sind.

EP 0 523 660 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft Alkenylgruppen aufweisende Siloxancopolymere sowie ein Verfahren zu deren Herstellung. Weiterhin betrifft die Erfindung vernetzbare Zusammensetzungen, die Alkenylgruppen aufweisendes Siloxancopolymer, Si-gebundene Wasserstoffatome aufweisendes Organopolysiloxan und Katalysator enthalten, sowie die Verwendung der Zusammensetzungen zur Herstellung von klebrige Stoffe abweisenden Überzügen.

Vernetzbare Zusammensetzungen, die Si-gebundene Vinylgruppen aufweisendes Organopolysiloxan, Si-gebundene Wasserstoffatome aufweisendes Organopolysiloxan und die Anlagerung von Si-gebundenem Wasserstoff an aliphatische Doppelbindung förderndem Katalysator enthalten, sind aus US-A 3,445,420 (ausgegeben 20. Mai 1969, G. J. Kookootsedes et al., Dow Corning Corporation) und GB-A 1 374 792 (ausgegeben 20. November 1974, J. A. Colquhoun et al., Dow Corning Ltd.) bekannt.

In US-A 4 347 346 (ausgegeben 31. August 1982, R. P. Eckberg, General Electric Company), US-A 4 476 166 (ausgegeben 9. Oktober 1984, R. P. Eckberg, General Electric Company) und US-A 4,504,645 (ausgegeben 12. März 1985, K. C. Melancon, Minnesota Mining and Manufacturing Company) ist beschrieben, daß in vernetzbaren Zusammensetzungen zur Herstellung von Klebstoff abweisenden Überzügen neben Organopolysiloxan mit Si-gebundenen Vinylgruppen auch Organopolysiloxan mit anderen Alkenylgruppen, wie Si-gebundenen Allyl-, Butenyl- oder Pentenylgruppen, eingesetzt werden kann.

Aus US-A 4,609,574 (ausgegeben 2. September 1986, J. R. Keryk et al., Dow Corning Corporation) sind vernetzbare Zusammensetzungen zur Herstellung von Klebstoff abweisenden Überzügen bekannt, die Organopolysiloxan mit höheren Alkenylgruppen, wie Si-gebundenen Hexenylgruppen, enthalten. Die höhere Alkenylgruppen enthaltenden Organopolysiloxane werden dabei üblicherweise in einem mehrstufigen Verfahren aus den entsprechenden Silanen durch Umsetzung von $\alpha,\omega$-Dien in großem Überschuß mit Silan mit Si-gebundem Wasserstoffatom und anschließender Hydrolyse dieser Silane und Equilibrierung dieser Silane mit Organopolysiloxanen gewonnen.

In EP-A 414 938 sind Zusammensetzungen beschrieben, die

(i) eine vernetzbares thermoplastisches Harz,
(ii) ein organisches Peroxid und
(iii) ein lineares Organopolysiloxan aus Einheiten der Formel

$$-[CH_2]_a-[SiR_2O]_b-SiR_2-,$$

(R = gesättigter aliphatischer oder aromatischer Rest,
a = 5 - 100,
b = 1 - 1000)

wobei das Organopolysiloxan am $[CH_2]_a$-Ende durch einen $-CH{=}CH_2$-Rest oder Wasserstoff und am $SiR_2$-Ende durch einen $-[CH_2]-CH{=}CH_2$-Rest oder Wasserstoff terminiert ist,

enthalten.

Die linearen Organopolysiloxane (iii) werden durch Umsetzung von einem Dien mit jeweils einer Vinylgruppe an beiden Enden mit einem linearen Organopolysiloxan mit endständigen Si-gebundenen Wasserstoffatomen in Gegenwart eines Hydrosilylierungsakatalysators erhalten. Die vernetzbaren Zusammensetzungen werden in Extrusions- und Formgebungsverfahren eingesetzt und als Vernetzungsmittel wird ein organisches Peroxid verwendet.

Es bestand die Aufgabe, Alkenylgruppen aufweisende Siloxancopolymere bereitzustellen, die in einem einfachen Verfahren hergestellt werden können, wobei das Verfahren es auch erlaubt, an einem Si-Atom mehr als eine Alkenylgruppe einzuführen, und die mit Si-gebundenen Wasserstoffatome aufweisenden Organopolysiloxanen in Gegenwart von die Anlagerung von Si-gebundenem Wasserstoff an aliphatische Doppelbindung förderndem Katalysator rasch vernetzen. Weiterhin bestand die Aufgabe vernetzbare Zusammensetzungen bereitzustellen, die zur Herstellung von klebrige Stoffe abweisenden Überzügen geeignet sind. Die Aufgabe wird durch die Erfindung gelöst.

Gegenstand der Erfindung sind vernetzbare Zusammensetzungen enthaltend

(A) Alkenylgruppen aufweisende Siloxancopolymere enthaltend

(a) Siloxaneinheiten der Formel

$$R_aSi(OR^1)_bO_{\frac{4-(a+b)}{2}} \qquad (I),$$

wobei

R gleiche oder verschiedene, gegebenfalls halogenierte Kohlenwasserstoffreste mit 1 bis 18 Kohlenstoffatomen je Rest,
$R^1$ gleiche oder verschiedene Alkylreste mit 1 bis 4 Kohlenstoffatomen je Rest, die durch ein Ethersauerstoffatom substituiert sein können, bedeutet,
a 0, 1, 2 oder 3,
b 0, 1, 2 oder 3

und die Summe a+b nicht größer als 3 ist,
(b) je Molekül mindestens eine Siloxaneinheit der Formel

$$AR_cSiO_{\frac{4-(c+1)}{2}} \qquad (II),$$

wobei

R die oben dafür angegebene Bedeutung hat,
c 0, 1 oder 2 ist,
A einen Rest der Formel

$$-CH_2CHR^3-R^2(CR^3=CH_2)_{x-1}$$

wobei
$R^2$ einen zweiwertigen, dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 2, 3 oder 4, bedeutet,

und
(c) je Molekül durchschnittlich mindestens eine Einheit, ausgewählt aus der Gruppe von Einheiten der Formeln

$$O_{\frac{4-(c+1)}{2}}R_cSi-A^1-SiR_cO_{\frac{4-(c+1)}{2}} \qquad (III),$$

$$O_{\frac{4-(c+1)}{2}}R_cSi-\underset{\displaystyle {|} \atop \displaystyle SiR_cO_{\frac{4-(c+1)}{2}}}{A^2}-SiR_cO_{\frac{4-(c+1)}{2}} \qquad (IV)$$

und

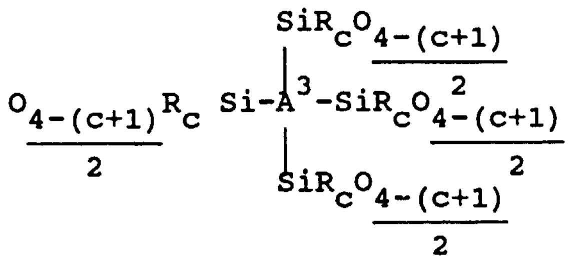

(V),

wobei

R und c die oben dafür angegebene Bedeutung haben,
$A^1$ einen Rest der Formel

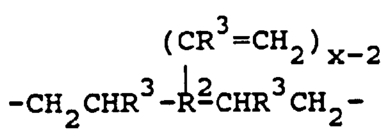

wobei
$R^2$, $R^3$ und x die oben dafür angegebene Bedeutung haben,
$A^2$ einen Rest der Formel

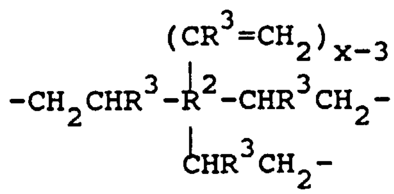

,

wobei
$R^2$, $R^3$ und x die oben dafür angegebene Bedeutung haben, mit der Maßgabe, daß $R^2$ kein zweiwertiger Kohlenwasserstoffrest ist, und
$A^3$ einen Rest der Formel

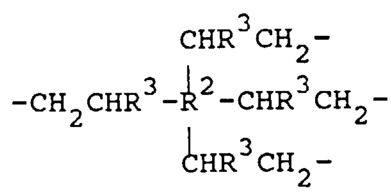

,

wobei
$R^2$ und $R^3$ die oben dafür angegebene Bedeutung haben, mit der Maßgabe, daß $R^2$ kein zweiwertiger oder dreiwertiger Kohlenwasserstoffrest ist, bedeutet, mit der Maßgabe, daß die Alkenylgruppen aufweisenden Siloxancopolymere eine Viskosität von höchstens 500000 mPa·s bei 25°C und durchschnittlich mindestens zwei Alkenylgruppen je Molekül der Formel

$$-CR^3=CH_2,$$

wobei
$R^3$ die oben dafür angegebene Bedeutung hat, aufweisen,

(B) Si-gebundene Wasserstoffatome aufweisende Organopolysiloxane und

(C) die Anlagerung von Si-gebundenen Wasserstoff an aliphatische Doppelbindung fördernde Katalysatoren.

Bei den erfindungsgemäßen vernetzbaren Zusammensetzungen werden als (A) Alkenylgruppen aufweisende Siloxancopolymere bevorzugt solche verwendet, die

(a) Siloxaneinheiten der Formel

$$R_2SiO \qquad (I'),$$

(b) je Molekül durchschnittlich mehr als eine Siloxaneinheit der Formel

$$AR_2SiO_{1/2} \qquad (II')$$

und

(c) je Molekül durchschnittlich mindestens eine Einheit, ausgewählt aus der Gruppe von Einheiten der Formeln

$$O_{1/2}R_2Si\text{-}A^1\text{-}SiR_2O_{1/2} \qquad (III')$$

und

$$\begin{array}{l} O_{1/2}R_2Si\text{-}A^2\text{-}SiR_2O_{1/2} \quad (IV'), \\ \qquad\qquad\quad | \\ \qquad\qquad\quad SiR_2O_{1/2} \end{array}$$

wobei R, A, $A^1$ und $A^2$ die oben dafür angegebene Bedeutung haben,

enthalten.

Besonders bevorzugt enthalten die Alkenylgruppen aufweisenden Siloxancopolymere je Molekül durchschnittlich mindestens zwei Siloxaneinheiten der Formel (II').

Die bei den erfindungsgemäßen vernetzbaren Zusammensetzungen eingesetzten (A) Alkenylgruppen aufweisenden Siloxancopolymere, werden dadurch hergestellt, daß mindestens zwei aliphatische Doppelbindungen aufweisende organische Verbindung (1) der allgemeinen Formel

$$R^2(CR^3{=}CH_2)_x,$$

wobei

$R^2$ einen zweiwertigen, dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 2, 3 oder 4 bedeutet,

mit Organopolysiloxan (2) mit durchschnittlich mehr als einem Si-gebundenen Wasserstoffatom je Molekül in Gegenwart von die Anlagerung von Si-gebundenem Wasserstoff an aliphatische Doppelbindung förderndem Katalysator (3) umgesetzt wird, wobei das eingesetzte Verhältnis von aliphatischer Doppelbindung in organischer Verbindung (1) zu Si-gebundenem Wasserstoff im Organopolysiloxan (2) 1,5:1 bis 20:1 beträgt.

Bei dem erfindungsgemäßen Verfahren werden Alkenylgruppen aufweisende Siloxancopolymere mit durchschnittlich mindestens zwei Alkenylgruppen je Molekül der Formel

$$-CR^3=CH_2 ,$$

wobei $R^3$ die oben dafür angegebene Bedeutung hat, erhalten.

Die erfindungsgemäßen, Alkenylgruppen aufweisenden Siloxancopolymere besitzen vorzugsweise eine Viskosität von 5 bis 500 000 mPa·s bei 25°C, bevorzugt 10 bis 10 000 mPa·s bei 25°C.

In den erfindungsgemäßen, Alkenylgruppen aufweisenden Siloxancopolymeren sind die Siloxanblöcke über Kohlenwasserstoffgruppen miteinander verbunden, woraus eine Kohlenwasserstoff-Siloxan-Blockstruktur resultiert. Vorzugsweise beträgt die Summe der Kohlenwasserstoffgruppen A, $A^1$, $A^2$ und $A^3$ in den Alkenylgruppen aufweisenden Siloxancopolymeren 0,1 bis 70 Gew.-%, bevorzugt 1 bis 10 Gew.-%, jeweils bezogen auf das Gesamtgewicht der Alkenylgruppen aufweisenden Siloxancopolymere.

Das erfindungsgemäße Polyadditionsverfahren führt zwangsläufig zu einer Polymerverteilung in bezug auf die Siloxan- wie auf die Kohlenwasserstoffblöcke. Ein solches "Polyaddukt" enthält üblicherweise auch niedere Oligomere, die auch Addukte beinhalten, welche nur aus einem Siloxanblock und zwei Kohlenwasserstoffblöcken bestehen.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest, Decylreste, wie der n-Decylrest; Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste und Aralkylreste, wie der Benzylrest, der $\alpha$- und der $\beta$-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Beispiele für Alkylreste $R^1$ sind der Methyl-, Ethyl-, n- Propyl-, iso-Propyl-, 1-n-Butyl-, 2-n-Butyl-, iso-Butyl-, und tert.-Butylrest. Bevorzugt sind der Methyl- und Ethylrest. Beispiele für Alkylreste $R^1$, die durch ein Ethersauerstoffatom substituiert sind, sind der Methoxyethyl- und Ethoxyethylrest.

Beispiele für Alkylreste $R^3$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest. Bevorzugt ist $R^3$, ein Wasserstoffatom.

Beispiele für mindestens zwei aliphatische Doppelbindungen aufweisende organische Verbindung (1), die bei dem erfindungsgemäßen Verfahren eingesetzt wird, sind

1,5-Hexadien,
1,7-Octadien,
1,9-Decadien,
1,11-Dodecadien,
1,13-Tetradecadien,
3,5-Dimethyl-1,6-heptadien,
3,5-Dimethyl-4-vinyl-1,6-heptadien,
1,2,4-Trivinylcyclohexan,
1,3,5-Trivinylcyclohexan,
1,4-Divinylbenzol und
1,2,3,4-Tetravinylcyclobutan,

wobei 1,2,4-Trivinylcyclohexan und 1,5-Hexadien bevorzugt sind.

Beispiele für den Rest $R^2$ sind daher solche der Formel

$$-(CH_2)_2-$$

$$-(CH_2)_4-$$

$$-(CH_2)_6-$$

$-(CH_2)_8-$

$-(CH_2)_{10}-$

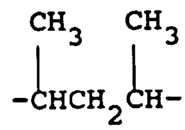

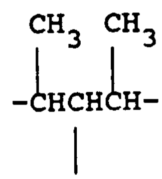

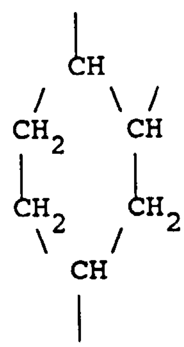

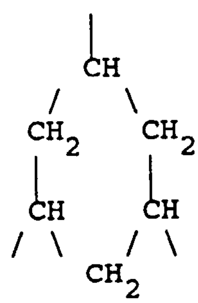

$-C_6H_4-$

und

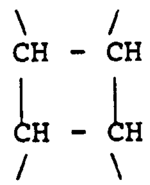

wobei die Reste der Formel

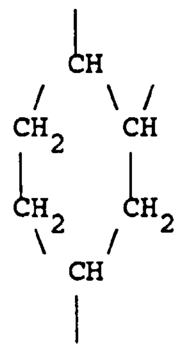

und

$$-(CH_2)_4-$$

bevorzugt sind.

Vorzugsweise enthalten die bei dem erfindungsgemäßen Verfahren eingesetzten Organopolysiloxane (2) durchschnittlich mindestens 1,5 Si-gebundene Wasserstoffatome, bevorzugt durchschnittlich mindestens 2 Si-gebundene Wasserstoffatome je Molekül.

Besonders bevorzugt enthalten die bei dem erfindungsgemäßen Verfahren eingesetzten Organopolysiloxane (2) 2 bis 4 Si-gebundene Wasserstoffatome je Molekül.

Bei dem erfindungsgemäßen Verfahren kann eine Art von Organopolysiloxan (2) oder verschiedene Arten von polysiloxan (2) eingesetzt werden. Auch sind die Organopolysiloxane (2) herstellungsbedingt Gemische, d.h. beispielsweise enthalten Organopolysiloxane mit 2 Si-gebundenen Wasserstoffatomen je Molekül auch Organopolysiloxane mit nur einem Si-gebundenen Wasserstoffatom je Molekül.

Vorzugsweise werden als Organopolysiloxane (2) solche der allgemeinen Formel

$$H_eR_fSiO_{\frac{4-(e+f)}{2}} \qquad (VI),$$

wobei

R die oben dafür angegebene Bedeutung hat,
e 0 oder 1, durchnittlich 0,005 bis 1,0,
f 0, 1, 2 oder 3, durchschnittlich 1,0 bis 2,0, und
die Summe e+f nicht größer als 3 ist,

bei dem erfindungsgemäßen Verfahren eingesetzt.

Bevorzugt werden als Organopolysiloxane (2) solche der allgemeinen Formel

$$H_dR_{3-d}SiO(SiR_2O)_o(SiRHO)_pSiR_{3-d}H_d \qquad (VII),$$

wobei

R die oben dafür angegebene Bedeutung hat,
d 0 oder 1,
o 0 oder eine ganze Zahl von 1 bis 1000 und
p 0 oder eine ganze Zahl von 1 bis 6 bedeutet,

bei dem erfindungsgemäßen Verfahren eingesetzt.

Die Organopolysiloxane (2) besitzen vorzugsweise eine Viskosität von 0,5 bis 20 000 mPa·s bei 25°C, bevorzugt 5 bis 1 000 mPas·s bei 25°C.

Bevorzugte Beispiele für Organopolysiloxane der Formel (VII) sind Mischpolymerisate aus Dimethylhydrogensiloxan- und Dimethylsiloxaneinheiten, Mischpolymerisate aus Dimethylhydrogensiloxan-, Dimethylsiloxan- und gensiloxaneinheiten, Mischpolymerisate aus Trimethylsiloxan- und Methylhydrogensiloxaneinheiten und Mischpolymerisate aus Trimethylsiloxan-, Dimethylsiloxan- und Methylhydrogensiloxaneinheiten.

Außer den bevorzugten Beispielen können auch solche Organopolysiloxane (2) eingesetzt werden, die zusätzlich bis zu 20 Mol% $SiO_2$-Einheiten und/oder bis zu 40 Mol% $RSiO_{3/2}$-Einheiten, wie Methylsiloxan- und/oder Phenylsiloxaneinheiten, enthalten. Werden diese Organopolysiloxane (2) mit organischer Verbindung (1) mit x = 2 eingesetzt, ergeben sich Copolymere, bei denen die Verzweigung im Siloxanblock liegt.

Verfahren zum Herstellen von Organopolysiloxanen mit mindestens zwei Si-gebundenen Wasserstoffatomen je Molekül, auch von solchen der bevorzugten Art, sind allgemein bekannt.

Organische Verbindung (1) wird bei dem erfindungsgemäßen Verfahren in solchen Mengen eingesetzt, daß aliphatische Doppelbindung in organischer Verbindung (1) zu Si-gebundenem Wasserstoff in Organopolysiloxan (2) im Verhältnis von bevorzugt 1,5 : 1 bis 10 : 1, besonders bevorzugt 1,5 : 1 bis 5 : 1, vorliegt.

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Doppelbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gammapicolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gammapicolin-Platindichlorid, Cyclopentadien-Platindichlorid sowie Umsetzungsprodukte von Platintetrachlorid mit Olefin und primärem Amin oder sekundärem Amin oder primärem und sekundärem Amin gemäß US-A 4 292 434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird vorzugsweise in Mengen von 0,5 bis 1 000 Gew.-ppm (Gewichtsteilen je Million Gewichtsteilen), bevorzugt in Mengen von 2 bis 50 Gew.-ppm, jeweils berechnet als elementares Platin und bezogen auf das Gesamtgewicht von organische Verbindung (1) und Organopolysiloxan (2).

Das erfindungsgemäße Verfahren wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 50°C bis 150°C, bevorzugt 80°C bis 120°C, durchgeführt.

Da die mindestens zwei aliphatische Doppelbindungen aufweisende organische Verbindung (1), z. B. 1,2,4-Trivinylcyclohexan, bei höheren Temperaturen zur Polymerisation neigt, können bei dem erfindungsgemäßen Verfahren Radikalinhibitoren, wie 4-Methoxyphenol, 2,6-Bis(tert.butyl)-4-methylphenol, Phenothiazin, Hydrochinon oder Brenzcatechin mitverwendet werden. Die Radikalinhibitoren werden dabei vorzugsweise in Mengen von 10 bis 500 Gew.-ppm, bezogen auf das Gesamtgewicht an organischer Verbindung (1) und Organopolysiloxan (2), eingesetzt.

Bei dem erfindungsgemäßen Verfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Von den nach dem erfindungsgemäßen Verfahren hergestellten Alkenylgruppen aufweisenden Siloxancopolymeren wird vorzugsweise überschüssige organische Verbindung (1) sowie gegebenenfalls mitverwendetes inertes organisches Lösungsmittel destillativ entfernt.

Die nach dem erfindungsgemäßen Verfahren hergestellten Alkenylgruppen aufweisenden Siloxancopolymere werden gegebenenfalls mit Organopolysiloxan (4) equilibriert.

Als Organopolysiloxane (4) werden vorzugsweise solche ausgewählt aus der Gruppe bestehend aus linearen, endständige Triorganosiloxygruppen aufweisenden Organopolysiloxanen der Formel

$$R_3SiO(SiR_2O)_rSiR_3 ,$$

wobei R die oben dafür angegebene Bedeutung hat und r 0 oder eine ganze Zahl im Wert von 1 bis 1500 ist, linearen, endständige Hydroxylgruppen aufweisenden Organopolysiloxanen der Formel

$$HO(SiR_2O)_sH ,$$

wobei R die oben dafür angegebene Bedeutung hat und s eine ganze Zahl im Wert von 1 bis 1500 ist, cyclischen Organopolysiloxanen der Formel

$$(R_2SiO)_t ,$$

wobei R die oben dafür angegebene Bedeutung hat und t eine ganze Zahl von 3 bis 12 ist,
und Mischpolymerisaten aus Einheiten der Formel

$$R_2SiO \text{ und } RSiO_{3/2} ,$$

wobei R die oben dafür angegebene Bedeutung hat, eingesetzt.

Das Mengenverhältnis des bei der gegebenenfalls durchgeführten Equilibrierung eingesetzten Organopolysiloxans (4) und Alkenylgruppen aufweisenden Siloxancopolymeren wird lediglich durch den gewünschten Anteil der Alkenylgruppen in den bei der gegebenenfalls durchgeführten Equilibrierung erzeugten Siloxancopolymeren und durch die gewünschte mittlere Kettenlänge bestimmt.

Bei dem gegebenenfalls durchgeführten Equilibrieren werden vorzugsweise basische Katalysatoren, welche die Equilibrierung fördern, eingesetzt. Beispiele für solche Katalysatoren sind Alkalihydroxide, wie Natriumhydroxid und Kaliumhydroxid, Trimethylbenzylammoniumhydroxid und ammoniumhydroxid. Bevorzugt sind Alkalihydroxide. Alkalihydroxide werden vorzugsweise in Mengen von 50 bis 10 000 Gew.-ppm (= Teile je Million), insbesondere 500 bis 2 000 Gew.-ppm, jeweils bezogen auf das Gesamtgewicht von eingesetztem Alkenylgruppen aufweisendem Siloxancopolymer und eingesetztem Organopolysiloxan (4), verwendet. Die Verwendung saurer Equilibrierungskatalysatoren ist zwar möglich, jedoch nicht bevorzugt.

Die gegebenenfalls durchgeführte Equilibrierung wird vorzugsweise bei 100°C bis 150°C und beim Druck der umgebenden Atmosphäre, also etwa bei 1020 hPa (abs.) durchgeführt. Falls erwünscht, können aber auch höhere oder niedrigere Drücke angewendet werden. Das Equilibrieren wird vorzugsweise in 5 bis 20 Gew.-%, bezogen auf das Gesamtgewicht von jeweils eingesetztem Alkenylgruppen aufweisendem Siloxancopolymer und eingesetztem Organopolysiloxan (4), in mit Wasser nichtmischbarem Lösungsmittel, wie Toluol, durchgeführt. Vor dem Aufarbeiten des bei dem Equilibrieren erhaltenen Gemisches kann der Katalysator unwirksam gemacht werden.

Das erfindungsgemäße Verfahren kann absatzweise, halbkontinuierlich oder vollkontinuierlich durchgeführt werden.

Die erfindungsgemäßen, Alkenylgruppen aufweisenden Siloxancopolymere können wie die Si-gebundene Vinylgruppen aufweisenden Organopolysiloxane mit mit Si-gebundenen Wasserstoff aufweisenden Organopolysiloxanen in Gegenwart von Hydrosilylierungskatalysatoren vernetzt werden. Weiterhin können die erfindungsgemäßen, Alkenylgruppen aufweisenden Siloxancopolymere auch mit Mercaptogruppen aufweisenden organischen Polymeren vernetzt werden.

Die die erfindungsgemäßen Siloxancopolymere enthaltenden vernetzbaren Zusammensetzungen werden vorzugsweise zur Herstellung von klebrige Stoffe abweisenden Überzügen, z. B. zur Herstellung von Trennpapieren, verwendet.

Die Herstellung der mit dem Trennpapier verbundenen Selbstklebematerialien erfolgt nach dem off-line Verfahren oder dem in-line Verfahren. Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt. Beim in-line Verfahren wurde gefunden, daß der Klebstoff, insbesondere wenn es sich um einen Acrylklebstoff handelt, sich mit dem Siliconüberzug auf dem Trennpapier verbindet, wenn der Klebstoff auf das mit der Siliconzusammensetzung beschichtete Trennpapier kurze Zeit nach der Vernetzung der Siliconzusammensetzung aufgetragen wird. Diese Bindung zwischen dem Siliconüberzug und dem Klebstoff wird beobachtet, wenn bei der Herstellung der Überzüge Vinylgruppen aufweisende Organopolysiloxane mit Si-gebundene Wasserstoffatome aufweisenden Organopolysiloxanen vernetzt werden.

Bei Verwendung der erfindungsgemäßen Zusammensetzungen zur Herstellung von Trennpapieren tritt diese Bindung zwischen dem Siliconüberzug und dem Klebstoff, wie Acrylklebstoff, beim in-line Verfahren nicht auf.

Bei den erfindungsgemäßen Zusammensetzungen kann eine Art von Siloxancopolymer (A) oder verschiedene Arten von Siloxancopolymer (A) eingesetzt werden.

Als Bestandteil (A) werden vorzugsweise Siloxancopolymere, enthaltend Einheiten der Formel (I), (II) und mindestens eine Einheit der Formel (III), (IV) oder (V), bevorzugt enthaltend Einheiten der Formel (I'), (II') und mindestens eine Einheit der Formel (III') oder (IV'), eingesetzt.

Als Bestandteil (B) können auch bei den erfindungsgemäßen Zusammensetzungen die gleichen Si-gebundene Wasserstoffatome aufweisenden Organopolysiloxane verwendet werden, die bei allen bisher bekannten Zusammensetzungen aus Vinylgruppen aufweisendem Organopolysiloxan, Si-gebundene Wasserstoffatome aufweisendem Organopolysiloxan und die Anlagerung von Si-gebundenem Wasserstoff an aliphatische Doppelbindung förderndem Katalysator eingesetzt werden konnten.

Vorzugsweise enthalten die Organopolysiloxane (B) mindestens 3 Si-gebundene Wasserstoffatome.

Als Bestandteil (B) werden bevorzugt Organopolysiloxane der Formel (VI), insbesondere solche der Formel

$$H_gR_{3-g}SiO(SiR_2O)_k(SiRHO)_lSiR_{3-g}H_g \qquad (VIII)$$

wobei

R die oben dafür angegebene Bedeutung hat,
g O oder 1
k O oder eine ganze Zahl von 1 bis 100 und
l O oder eine ganze Zahl von 1 bis 100 ist,

verwendet.

Beispiele für Organopolysiloxane (B) sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogensiloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Verfahren zum Herstellen von Organopolysiloxanen (B), auch von solchen Organopolysiloxanen (B) der bevorzugten Art, sind allgemein bekannt.

Organopolysiloxan (B) wird vorzugsweise in Mengen von 0,5 bis 6, insbesondere 1 bis 3 Grammatom Si-gebundenen Wasserstoffs je Mol Alkenylgruppe $-CR^3{=}CH_2$ in den Alkenylgruppen aufweisenden Siloxancopolymeren (A) eingesetzt.

Als die Anlagerung von Si-gebundenem Wasserstoff an aliphatische Doppelbindung förderndem Katalysator (C) können auch bei den erfindungsgemäßen Zusammensetzungen die gleichen Katalysatoren verwendet werden, die auch bei den bisher bekannten Zusammensetzungen zum Vernetzen von aliphatische Doppelbindungen enthaltenden Organopolysiloxanen mit Verbindungen, die Si-gebundenen Wasserstoff enthalten, zur Förderung der Vernetzung eingesetzt werden konnten. Als Bestandteil (C) werden vorzugsweise die oben genannten Katalysatoren (3) verwendet.

Katalysator (C) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht des Siloxancopolymers (A) und Organopolysiloxans (B).

Beispiele für weitere Bestandteile, die bei den erfindungsgemäßen Zusammensetzungen mitverwendet werden können, sind die Anlagerung von Si-gebundenem Wasserstoff an aliphatische Doppelbindung bei Raumtemperatur verzögernde Mittel, sogenannte Inhibitoren (D), Mittel zur Einstellung der Trennkraft, Lösungsmittel, Haftvermittler und Pigmente.

Als Inhibitoren (D) können auch bei den erfindungsgemäßen Zusammensetzungen alle Inhibitoren verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens einer aliphatischen Dreifachbindung gemäß US-A 3,445,420, wie 1-Ethinylcyclohexan-l-ol, 2-Methyl-3-butin-2-ol, 3-Methyl-1-pentin-3-ol, 2,5-Dimethyl-3-hexin-2,5-diol und 3,5-Dimethyl-1-hexin-3-ol, Inhibitoren gemäß US-A 2,476,166, wie eine Mischung aus Diallylmaleinat und Vinylacetat, und Inhibitoren gemäß US 4,504,645, wie Maleinsäuremonoester.

Vorzugsweise wird der Inhibitor (D) in Mengen von 0,001 bis 10 Gew.-%, bezogen auf das Gesamtgewicht der Siloxancopolymere (A) und Organopolysiloxane (B), eingesetzt.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^4(CH_3)_2SiO_{1/2} \text{ und } SiO_2 ,$$

sogenannte MQ-Harze, wobei $R^4$ ein Wasserstoffatom, ein Methylrest, ein Vinylrest oder ein Rest A (A hat die oben dafür angegebene Bedeutung) ist, und die Einheiten der Formel $R^4(CH_3)_2SiO_{1/2}$ gleich oder verschieden sein können. Das Verhältnis von Einheiten der Formel $R^4(CH_3)_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Siloxancopolymere (A) und Organopolysiloxane (B), eingesetzt.

Die bei den erfindungsgemäßen Zusammensetzungen gegebenenfalls mitverwendeten Lösungsmittel können die gleichen Lösungsmittel sein, die bei den bisher bekannten Zusammensetzungen aus Si-gebundene Vinylgruppen ausweisenden Organopolysiloxanen, Si-gebundenen Wasserstoff aufweisenden Organopolysiloxanen und die Anlagerung von Si-gebundenem Wasserstoff an aliphatische Doppelbindung förderndem Katalysator verwendet werden konnten. Beispiele für solche Lösungsmittel sind Benzine, z. B. Alkangemische mit einem Siedebereich von 80°C bis 110°C bei 1012 mbar (abs.), n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von 10 bis 95 Gew.-%, bezogen auf das Gewicht der Alkenylgruppen aufweisenden Siloxancopolymere (A), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 50°C bis 150°C. Ein Vorteil bei den erfindungsgemäßen Zusammensetzungen ist, daß eine rasche Vernetzung schon bei niedrigen Temperaturen erzielt wird. Als Energiequellen für die Vernetzung durch Erwärmen werden vorzugsweise Öfen, z. B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

Beispiel 1:

Es werden 330 g eines Mischpolymerisats aus Trimethylsiloxan-, Dimethylsiloxan- und Hydrogenmethylsiloxaneinheiten mit einer Viskosität von 90 $mm^2 \cdot s^{-1}$ bei 25°C, das 0,2 g Si-gebundenen Wasserstoff enthält, mit 33 g (0,4 Mol) 1,5-Hexadien und 4 mg Platin in Form einer Lösung von $H_2PtCl_6{*}H_2O$ in Isopropanol gemischt. Nach 2 Stunden bei 60°C und 2 weiteren Stunden bei 80°C, jeweils unter Stickstoffatmosphäre, sind ca 99 % der Si-gebundenen Wasserstoffatome des Mischpolymerisats umgesetzt. Das Rohprodukt wird bei 80°C und ca. 5 hPa einkonzentriert und es werden 335 g eines klaren Öls der Viskosität von 190 $mm^2 \cdot s^{-1}$ bei 25°C erhalten. Entsprechend der Herstellung besteht das Copolymer aus Siloxanblöcken, die mit Si-gebundenen 5-Hexenylgruppen (A) substituiert und über $C_6$-Alkylengruppen ($A^1$) verbunden sind. Das Copolymer enthält 4 Gew.-% Kohlenwasserstoffgruppen A und $A^1$, bezogen auf das Gesamtgewicht des Copolymers. Das Copolymer besitzt eine Jodzahl (= Zahl, die angibt, wieviel g Jod von 100 g Substanz gebunden werden) von 9,9.

Beispiel 2:

Die Arbeitsweise von Beispiel 1 wird wiederholt mit der Abänderung, daß 425 g des Mischpolymerisats mit einer Viskosität von 94 $mm^2 \cdot s^{-1}$ bei 25°C und 0,047 Gew.-% Si-gebundenem Wasserstoff anstelle von 330 g des Mischpolymerisats mit einer Viskosität von 90 $mm^2 \cdot s^{-1}$ bei 25°C und 34,5 g 1,9-Decadien anstelle von 33 g 1,5-Hexadien eingesetzt werden. Es werden 430 g eines Copolymers mit einer Viskosität von 20 000 $mm^2 \cdot s^{-1}$ bei 25°C und einer Jodzahl von 7,52 erhalten. Entsprechend der Herstellung besteht das Copolymer aus Siloxanblöcken, die mit Si-gebundenen 9-Decenylgruppen substituiert und über $C_{10}$-Alkylengruppen verbunden sind.

Beispiel 3:

67 g 1,2,4-Trivinylcyclohexan (entsprechend 1,2 val C=C) werden mit 20 mg 4-Methoxyphenol und 5 mg Platin in Form einer Lösung von Platintetrachlorid in 1-Octen gemischt. Innerhalb von 5 Stunden werden bei 100°C unter Stickstoffatmosphäre 906 g eines $\alpha,\omega$-Dihydrogendimethylpolysiloxans, das 0,35 g Si-gebundenen Wasserstoff enthält, zugetropft. Nach weiteren 3 Stunden sind 99 % der Si-gebundenen Wasserstoffatome des $\alpha,\omega$-Dihydrogendimethylpolysiloxans umgesetzt, und das Rohprodukt wird bei 100°C und 2 hPa einkonzentriert. Es werden 910 g eines Copolymers mit einer Viskosität von 416 $mm^2 \cdot s^{-1}$ bei 25°C und einer Jodzahl von 11,0 erhalten. Das Copolymer enthält Dimethylpolysiloxanblöcke, die über cyclische Kohlenwasserstoffgruppen ($A^1$, $A^2$) verbunden sind und endständige Siloxaneinheiten, die Si-gebundene $\beta$-(Divinylcyclohexyl)ethylgruppen (A), aufweisen. Das Copolymer enthält 4 Gew.-% Kohlenwasserstoffgruppen A, $A^1$ und $A^2$, bezogen auf das Gesamtgewicht des Copolymers.

Beispiel 4:

40 g (0,25 Mol) 1,13-Tetradecadien werden mit 2,5 mg Platin in Form einer Lösung von Platintetrachlorid in 1-Octen gemischt. Zu dem Gemisch werden unter Stickstoffatmosphäre bei 80°C 555 g eines α,ω-Dihydrogendimethylpolysiloxans, das 0,23 g Si-gebundenen Wasserstoff enthält, zugetropft. Nach 3 Stunden sind ca. 98 % der Si-gebundenen Wasserstoffatome des α,ω-Dihydrogendimethylpolysiloxans umgesetzt. Flüchtige Bestandteile werden bei 120°C und $10^{-2}$ hPa entfernt. Es werden 570 g eines Copolymers mit einer Viskosität von 331 $mm^2 \cdot s^{-1}$ bei 25°C, einem durchschnittlichen Molekulargewicht von ca. 9000 und einer Jodzahl von 5,64 erhalten. Das lineare Copolymer besteht aus Dimethylpolysiloxanblöcken, die über $C_{14}$-Alkylengruppen ($A^1$) verbunden sind, und weist endständige Si-gebundene 13-Tetradecenylgruppen (A) auf. Das Copolymer enthält 6 Gew.-% Kohlenwasserstoffgruppen A und $A^1$, bezogen auf das Gesamtgewicht des Copolymers.

Beispiel 5:

252 g 1,2,4-Trivinylcyclohexan (entsprechend 4,5 val C=C) werden mit 25 mg 4-Methoxyphenol und 3 mg Platin in Form einer Lösung von Platintetrachlorid in 1,3-Divinyltetramethyldisiloxan gemischt. Innerhalb von 2 Stunden werden bei 100°C unter Stickstoffatmosphäre 81 g 1,1,3,3-Tetramethyldisiloxan zugetropft. Nach weiteren 5 Stunden sind 99,5 % der Si-gebundenen Wasserstoffatome des 1,1,3,3-Tetramethyldisiloxans umgesetzt. Die flüchtigen Bestandteile werden bei 100°C und 2 hPa entfernt. Es werden 220 g eines klaren hellgelben Öls mit einer Viskosität von 121 $mm^2 \cdot s^{-1}$ bei 25°C und einer Jodzahl von 174 erhalten. Das Copolymer enthält Tetramethyldisiloxaneinheiten, die über cyclische Kohlenwasserstoffgruppen ($A^1$, $A^2$) verbunden sind und endständige Siloxaneinheiten, die Si-gebundene β-(Divinylcyclohexyl)-ethylgruppen (A), aufweisen. Das Copolymer enthält 65 Gew.-% Kohlenwasserstoffgruppen A, $A^1$ und $A^2$, bezogen auf das Gesamtgewicht des Copolymers.

Beispiel 6:

223 g 1,2,4-Trivinylcyclohexan (entsprechend 4,0 val C=C) werden mit 25 mg 4-Methoxyphenol und 5 mg Platin in Form einer Lösung von Platintetrachlorid in 1,3-Divinyltetramethyldisiloxan gemischt. Innerhalb von 2 Stunden werden bei 100°C unter Stickstoffatmosphäre 304 g eines kurzkettigen α,ω-Dihydrogendimethylpolysiloxans, das 1,2 g Si-gebundenen Wasserstoff enthält, zugetropft. Nach einer weiteren Stunde sind 99 % der Si-gebundenen Wasserstoffatome des α,ω-Dihydrogendimethylpolysiloxans umgesetzt. Die flüchtigen Bestandteile werden bei 100°C und 2 hPa entfernt. Es werden 410 g eines Copolymers mit einer Viskosität von 65 $mm^2 \cdot s^{-1}$ bei 25°C und einer Jodzahl von 84 erhalten. Das Copolymer enthält Dimethylsiloxanblöcke mit durchschnittlich sieben Siloxaneinheiten, die über cyclische Kohlenwasserstoffgruppen ($A^1$, $A^2$) verbunden sind und endständige Siloxaneinheiten, die Si-gebundene β-(Divinylcyclohexyl)ethylgruppen (A) aufweisen. Das Copolymer enthält 30 Gew.-% Kohlenwasserstoffgruppen A, $A^1$ und $A^2$, bezogen auf das Gesamtgewicht des Copolymers.

Beispiel 7:

126 g 1,2,4-Trivinylcyclohexan werden mit 50 mg 4-Methoxyphenol und 9 mg Platintetrachlorid gemischt. Innerhalb von ca. 10 Minuten werden bei 100°C unter Stickstoffatmosphäre 425 g eines Mischpolymerisats aus Trimethylsiloxan-, Dimethylsiloxan- und Hydrogenmethylsiloxaneinheiten mit einer Viskosität von 94 $mm^2 \cdot s^{-1}$ bei 25°C, das 0,047 Gew.-% Si-gebundenen Wasserstoff enthält, zugetropft. Nach einer weiter Reaktionszeit von 24 Stunden werden bei 100°C und 2 hPa die flüchtigen Bestandteile entfernt. Es werden 430 g eines klaren hellgelben Öls mit einer Viskosität von 366 $mm^2 \cdot s^{-1}$ bei 25°C und einer Jodzahl von 17,0, das in Toluol klar löslich ist, erhalten. Gemäß dem $^1$H-NMR-Spektrum beträgt das Verhältnis der Gruppen $H_2C$=CH- zu Si-$CH_2$-$CH_2$-65 : 35 und das Copolymer enthält 7 Gew.-% Kohlenwasserstoffgruppen A, $A^1$ und $A^2$, bezogen auf das Gesamtgewicht des Copolymers. In dem Copolymer sind die Siloxanblöcke über die cyclischen Kohlenwasserstoffketten ($A^1$, $A^2$) verzweigt. Das Copolymer weist Si-gebundene β-(Divinylcyclohexyl)ethylgruppen (A) auf.

Beispiel 8:

Es werden 425 g eines Mischpolymerisats aus Trimethylsiloxan-, Dimethylsiloxan- und Hydrogenmethylsiloxaneinheiten mit einer Viskosität von 94 $mm^2 \cdot s^{-1}$ bei 25°C, das 0,047 Gew.-% Si-gebundenen Wasserstoff enthält, mit 20,5 g 1,5-Hexadien und 4 mg Platin in Form einer Lösung von $H_2PtCl_6 * H_2O$ in Isopropanol gemischt. Unter Stickstoffatmosphäre wird das Gemisch 2 Stunden auf 60°C und 2 weiteren Stunden auf 80°C erwärmt. Flüchtige Bestandteile werden dann bei 100°C und 2 hPa (abs.) entfernt. Es wird ein klares Öl mit einer Viskosität von 480 $mm^2 \cdot s^{-1}$ bei 25°C erhalten. Entsprechend der Herstellung besteht das unvernetzte Copolymer aus Siloxanblöcken, die mit Si-gebundenen 5-Hexenylgruppen (A) substituiert und über $C_6$-Alkylengruppen ($A^1$) verbunden sind. Das Copolymer enthält ca. 3 Gew.-% Kohlenwasserstoffgruppen A und $A^1$, bezogen auf das Gesamtgewicht des Copolymers. Das Copolymer besitzt eine Jodzahl von 7,7 und gemäß dem $^1$H-NMR-Spektrum beträgt das Verhältnis von $H_2C{=}CH$- (5-Hexenylgruppe) zu $SiCH_2$- (Verknüpfungspunkt von Siloxan- und Kohlenwasserstoffblock) 0,60. Das Copolymer enthält durchschnittlich mehr als eine $C_6$-Alkylengruppe je Molekül.

Beispiel 9:

488 g eines α,ω-Dihydrogendimethylpolysiloxans, das 0,041 Gew.-% Si-gebundenen Wasserstoff enthält, werden mit 13,8 g 1,5-Hexadien und 5 mg Platin in Form einer Lösung von Platintetrachlorid in 1-Octen gemischt. Nach einer Stunde Erwärmen bei 60°C sind über 99 % der Si-gebundenen Wasserstoffatome des α,ω-Dihydrogendimethylpolysiloxans umgesetzt. Die flüchtigen Bestandteile werden bei 100°C und 2 hPa (abs.) entfernt. Es werden 490 g eines klaren farblosen Öls mit einer Viskosität von 370 $mm^2 \cdot s^{-1}$ bei 25°C erhalten. Das lineare Copolymer besteht aus Dimethylpolysiloxanblöcken, die über $C_6$-Alkylengruppen ($A^1$) verbunden sind, und weist endständige Si-gebundene 5-Hexenylgruppen (A) auf. Das Copolymer enthält ca. 2,5 Gew.-% Kohlenwasserstoffgruppen A und $A^1$, bezogen auf das Gesamtgewicht des Copolymers. Das Copolymer besitzt eine Jodzahl von 4,3. Gemäß dem $^1$H-NMR-Spektrum beträgt das Verhältnis von $H_2C{=}CH$- (5-Hexenylgruppe) zu $SiCH_2$- (Brückeneinheit $O_{1/2}(CH_3)_2\underline{SiCH_2}(CH_2)_4\underline{CH_2Si}(CH_3)_2O_{1/2}$ und endständige Einheit $H_2C{=}CH(CH_2)_3\underline{CH_2Si}(CH_3)_2O_{1/2}$) 0,50. Damit enthält das Copolymer durchschnittlich eine $C_6$-Alkylengruppe je Molekül.

Beispiel 10:

100 Gewichtsteile des Hexenylpolymers aus Beispiel 8 mit lateralen Hexenylgruppen und Hexan-1,6-diylbrücken werden mit 0,25 Gewichtsteilen Ethinylcyclohexanol und 2,5 Gewichtsteilen eines Mischpolymerisats aus Methylhydrogen- und Trimethylsiloxaneinheiten mit durchschnittlich 25 Siloxaneinheiten vermischt. Als Katalysator setzt man der Mischung Platin-Divinyltetramethylsiloxan-Komplex zu, so daß sie 100 Gew.-ppm Platin enthält. Das Verhältnis von SiH-Gruppen zu $H_2C{=}CH$-Gruppen beträgt ca. 1,2.

Die so hergestellte gebrauchsfertige Mischung (Topfzeit ca. 6 Tage) wird mittels Rakel auf SCK-Papier (supercalendered kraft) in einer Schichtdicke von ca. 1,2 µm gebracht. Die Aushärtung der Beschichtung erfolgt während 8 Sekunden im Umluftofen bei 95°C, wobei die Oberfläche eine Temperatur von 68°C erreicht. Das beschichtete Papier wird sofort mit dem Acrylkleber Gelva 1753 (erhältlich bei der Fa. Monsanto) und einer weiteren Papierschicht laminiert. Nach FINAT ergeben sich folgende Trennkräfte:

| Zeitpunkt | Trennkraft (g/inch) (1 inch = 2.54 cm) |
|---|---|
| sofort | 131 |
| nach 3 Tagen | 133 |

Das Laminat zeigt keinen "acrylic lock-up".

Beispiel 11:

Man bereitet eine ähnliche Rezeptur wie in Beispiel 10, aber mit dem Unterschied, daß statt Ethinylcyclohexanol 0,20 Gewichtsteile 2-Methyl-3-butin-2-ol und statt des dortigen Mischpolymerisats eines aus Methylhydrogen-, Dimethyl- und Trimethylsiloxaneinheiten mit der Viskosität von 42 $mm^2/s$ und einem Aktivwasserstoffgehalt von 1,10 Gew.-% eingesetzt wird. Bei einer Einsatzmenge von 5,6 Gewichtsteilen dieses Mischpolymerisats beträgt das Verhältnis von SiH-Gruppen zu $H_2C{=}CH$-Gruppen ca. 2,0.

Die gebrauchsfertige Mischung (Topfzeit ca. 4 Tage) wird in ca. 1,2 µm Schichtdicke auf Papier (Buxil N 925, Bosso) aufgebracht und im Umluftofen bei 80°C 22 Sekunden lang ausgehärtet. Die Beschichtung ist abriebfest.

Eine halbe Stunde nach Beschichtung wird das Trennpapier mit handelsüblichen 2,5 cm breiten Klebebändern "Tesafilm K 7476" (Fa. Beiersdorf AG, Hamburg) beklebt. Die Bestimmung des Trennwertes und der Restklebkraft erfolgt nach FINAT 10 und 11:

| Meßzeitpunkt | Trennkraft (g/inch) (1 inch = 2.54 cm) | Restklebekraft (%) |
|---|---|---|
| nach 20 h | 9,0 | 103 |
| 168 h | 11,7 | |
| 500 h | 12,7 | |

(fortgesetzt)

| Meßzeitpunkt | Trennkraft (g/inch) (1 inch = 2.54 cm) | Restklebekraft (%) |
|---|---|---|
| 1000 h | 12,5 | |

Die Trennwerte sind niedrig und weitgehend stabil. Entsprechend der hohen Restklebkraft findet kein Siliconübertrag in den Kleber statt. Der Siliconfilm zeigt selbst bei niedriger Aushärtetemperatur keine störende Migration.

## Patentansprüche

**Patentansprüche für folgende Vertragsstaaten : AT, BE, CH, DE, FR, GB, IT, LI, NL, SE**

**1.** Vernetzbare Zusammensetzungen enthaltend

(A) Alkenylgruppen aufweisende Siloxancopolymere enthaltend

(a) Siloxaneinheiten der Formel

$$R_aSi(OR^1)_bO_{\frac{4-(a+b)}{2}} \quad (I),$$

wobei

R gleiche oder verschiedene, gegebenfalls halogenierte Kohlenwasserstoffreste mit 1 bis 18 Kohlenstoffatomen je Rest,
$R^1$ gleiche oder verschiedene Alkylreste mit 1 bis 4 Kohlenstoffatomen je Rest, die durch ein Ethersauerstoffatom substituiert sein können, bedeutet, a 0, 1, 2 oder 3,
b 0, 1, 2 oder 3

und die Summe a+b nicht größer als 3 ist,

(b) je Molekül mindestens eine Siloxaneinheit der Formel

$$AR_cSiO_{\frac{4-(c+1)}{2}} \quad (II),$$

wobei

R die oben dafür angegebene Bedeutung hat,
c 0, 1 oder 2 ist,
A einen Rest der Formel

$$-CH_2CHR^3-R^2(CR^3=CH_2)_{x-1}$$

wobei
$R^2$ einen zweiwertigen, dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 2, 3 oder 4 bedeutet,

und

(c) je Molekül durchschnittlich mindestens eine Einheit, ausgewählt aus der Gruppe von Einheiten der

Formeln

$$O_{\frac{4-(c+1)}{2}}R_cSi\text{-}A^1\text{-}SiR_cO_{\frac{4-(c+1)}{2}} \quad \text{(III),}$$

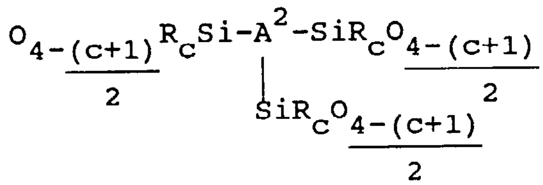

(IV)

und

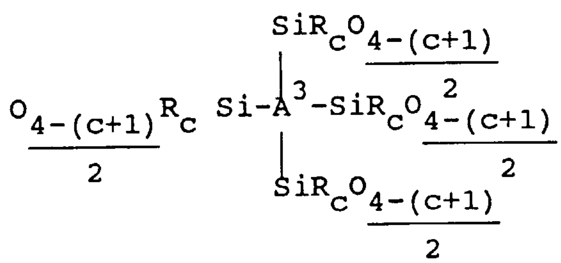

(V),

wobei

R und c die oben dafür angegebene Bedeutung haben,
$A^1$ einen Rest der Formel

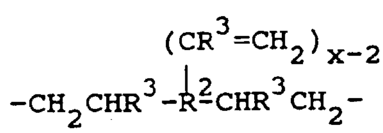

wobei
$R^2$, $R^3$ und x die oben dafür angegebene Bedeutung haben,
$A^2$ einen Rest der Formel

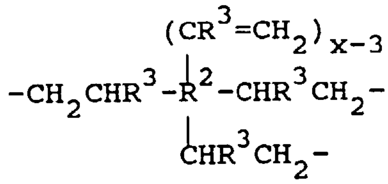

,

wobei
$R^2$, $R^3$ und x die oben dafür angegebene Bedeutung haben, mit der Maßgabe, daß $R^2$ kein zweiwertiger Kohlenwasserstoffrest ist, und
$A^3$ einen Rest der Formel

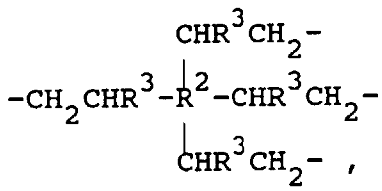

wobei
$R^2$ und $R^3$ die oben dafür angegebene Bedeutung haben, mit der Maßgabe, daß $R^2$ kein zweiwertiger oder dreiwertiger Rest ist, bedeutet, mit der Maßgabe, daß die Alkenylgruppen aufweisenden Siloxancopolymere eine Viskosität von höchstens 500000 mPa·s bei 25°C und durchschnittlich mindestens zwei Alkenylgruppen je Molekül der Formel

$$-CR^3{=}CH_2 ,$$

wobei
$R^3$ die oben dafür angegebene Bedeutung hat,

aufweisen,

(B) Si-gebundene Wasserstoffatome aufweisende Organopolysiloxane und

(C) die Anlagerung von Si-gebundenem Wasserstoff an aliphatische Doppelbindung fördernde Katalysatoren.

**2.** Vernetzbare Zusammensetzungen nach Anspruch 1, dadurch gekennzeichnet, daß
(D) Inhibitoren
enthalten sind.

**3.** Vernetzbare Zusammensetzungen nach Anspruch 1 oder 2, dadurch gekennzeichnet, daß als (A) Alkenylgruppen aufweisende Siloxancopolyere solche verwendet werden, die enthalten

(a) Siloxaneinheiten der Formel

$$R_2SiO \qquad (I')$$

(b) je Molekül durchschnittlich mehr als eine Siloxaneinheit der Formel

$$AR_2SiO_{1/2} \qquad (II')$$

und
(c) je Molekül durchschnittlich mindestens eine Einheit, ausgewählt aus der Gruppe von Einheiten der Formeln

$$O_{1/2}R_2Si\text{-}A^1\text{-}SiR_2O_{1/2} \qquad (III')$$

und

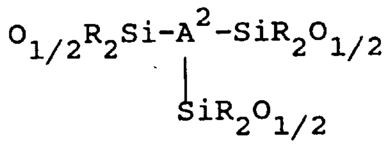 (IV') ,

wobei

R gleiche oder verschiedene, gegebenenfalls halogenierte Kohlenwasserstoffreste mit 1 bis 18 Kohlenstoffatomen je Rest,
A einen Rest der Formel

$$-CH_2CHR^3-R^2(CHR^3=CH_2)_{x-1}$$

wobei
$R^2$ einen zweiwertigen, dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 2, 3 oder 4 bedeutet,
$A^1$ einen Rest der Formel

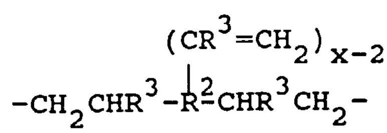 ,

wobei
$R^2$, $R^3$ und x die oben dafür angegebene Bedeutung haben und
$A^2$ einen Rest der Formel

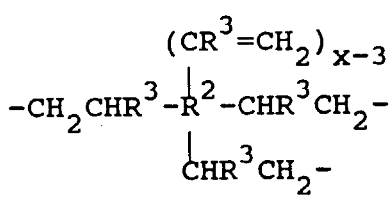 ,

wobei
$R^2$, $R^3$ und x die oben dafür angegebene Bedeutung haben, mit der Maßgabe, daß R2 kein zweiwertiger Kohlenwasserstoffrest ist, bedeutet, mit der Maßgabe, daß die Alkenylgruppen aufweisenden Siloxancopolymere eine Viskosität von höchstens 500000 mPa·s bei 25°C und durchschnittlich mindestens zwei Alkenylgruppen je Molekül der Formel

$$-CR^3=CH_2,$$

wobei
$R^3$ die oben dafür angegebene Bedeutung hat, aufweisen.

**4.** Vernetzbare Zusammensetzungen nach Anspruch 1, 2 oder 3, dadurch gekennzeichnet, daß als (A) Alkenylgruppen aufweisende Siloxancopolymere solche verwendet werden, bei denen der Rest $R^3$ ein Wasserstoffatom ist.

**5.** Verwendung der Zusammensetzungen nach einem der Ansprüche 1 bis 4 zur Herstellung von klebrige Stoffe abweisenden Überzügen.

**6.** Alkenylgruppen aufweisende Siloxancopolymere enthaltend

(a) Siloxaneinheiten der Formel

$$R_aSi(OR^1)_bO_{\frac{4-(a+b)}{2}} \qquad (I),$$

wobei

R gleiche oder verschiedene, gegebenfalls halogenierte Kohlenwasserstoffreste mit 1 bis 18 Kohlenstoffatomen je Rest,
$R^1$ gleiche oder verschiedene Alkylreste mit 1 bis 4 Kohlenstoffatomen je Rest, die durch ein Ethersauerstoffatom substituiert sein können, bedeutet,
a 0, 1, 2 oder 3,
b 0, 1, 2 oder 3

und die Summe a+b nicht größer als 3 ist,

(b) je Molekül mindestens eine Siloxaneinheit der Formel

$$AR_cSiO_{\frac{4-(c+1)}{2}} \qquad (II),$$

wobei

R die oben dafür angegebene Bedeutung hat,
c 0, 1 oder 2 ist,
A einen Rest der Formel

$$-CH_2CHR^3-R^2(CR^3=CH_2)_{x-1}$$

wobei
$R^2$ einen zweiwertigen, dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 2, 3 oder 4 bedeutet,

und

(c) je Molekül durchschnittlich mindestens eine Einheit, ausgewählt aus der Gruppe von Einheiten der Formeln

$$O_{\frac{4-(c+1)}{2}}R_cSi-A^1-SiR_cO_{\frac{4-(c+1)}{2}} \qquad (III),$$

$$O_{\frac{4-(c+1)}{2}}R_cSi-A^2(-SiR_cO_{\frac{4-(c+1)}{2}})-SiR_cO_{\frac{4-(c+1)}{2}} \qquad (IV)$$

und

$$\begin{array}{c} \qquad\qquad\qquad SiR_cO_{\frac{4-(c+1)}{2}} \\ \qquad\qquad\quad | \\ O_{\frac{4-(c+1)}{2}}R_c\,Si-A^3-SiR_cO_{\frac{4-(c+1)}{2}} \\ \qquad\qquad\quad | \\ \qquad\qquad\qquad SiR_cO_{\frac{4-(c+1)}{2}} \end{array} \qquad (V),$$

wobei

R und c die oben dafür angegebene Bedeutung haben,

A1 einen Rest der Formel

$$\begin{array}{c} \qquad\qquad (CR^3{=}CH_2)_{x-2} \\ \qquad | \\ -CH_2CHR^3-R^2-CHR^3CH_2- \end{array}$$

wobei

$R^2$, $R^3$ und x die oben dafür angegebene Bedeutung haben,

$A^2$ einen Rest der Formel

$$\begin{array}{c} \qquad (CR^3{=}CH_2)_{x-3} \\ | \\ -CH_2CHR^3-R^2-CHR^3CH_2- \\ | \\ \qquad CHR^3CH_2- \end{array} \qquad ,$$

wobei

$R^2$, $R^3$ und x die oben dafür angegebene Bedeutung haben, mit der Maßgabe, daß R2 kein zweiwertiger Kohlenwasserstoffrest ist, und

$A^3$ einen Rest der Formel

$$\begin{array}{c} \qquad CHR^3CH_2- \\ | \\ -CH_2CHR^3-R^2-CHR^3CH_2- \\ | \\ \qquad CHR^3CH_2- \end{array} \quad ,$$

wobei

$R^2$ und $R^3$ die oben dafür angegebene Bedeutung haben, mit der Maßgabe, daß $R^2$ kein zweiwertiger oder dreiwertiger Rest ist, bedeutet,

mit der Maßgabe, daß die Alkenylgruppen aufweisenden Siloxancopolymere eine Viskosität von höchstens 500000 mPa·s bei 25°C und durchschnittlich mindestens zwei Alkenylgruppen je Molekül der Formel

$$-CR^3=CH_2 ,$$

wobei

$R^3$ die oben dafür angegebene Bedeutung hat, aufweisen, und mit der Maßgabe, daß lineare Organopolysiloxane aus folgenden wiederkehrenden Einheiten

$$-[CH_2]_{a'}-[R'_2SiO]_{b'}-R'_2Si-$$

wobei R' eine gesättigte aliphatische oder aromatische Gruppe ist und jedes R' gleich oder verschieden sein kann, a' 5 bis 100 und b' 1 bis 1000 bedeutet und die Organopolysiloxane am $-[CH_2]_{a'}$-Ende mit $-CH=CH_2$ oder Wasserstoff und am $-R'_2Si$-Ende mit $-[CH_2]_{a'}-CH=CH_2$ oder Wasserstoff beendet sind, wobei wenigstens eine $-CH=CH_2$ Gruppe anwesend ist, ausgeschlossen sind.

**7.** Verfahren zur Herstellung der Alkenylgruppen aufweisenden Siloxancopolymere nach Anspruch 6, dadurch gekennzeichnet, daß mindestens zwei aliphatische Doppelbindungen aufweisende organische Verbindung (1) der allgemeinen Formel

$$R^2(CR^3=CH_2)_x,$$

wobei

$R^2$ einen zweiwertigen, dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 2, 3 oder 4 bedeutet,

mit Organopolysiloxan (2) mit durchschnittlich mehr als einem Si-gebundenen Wasserstoffatom je Molekül in Gegenwart von die Anlagerung von Si-gebundenem Wasserstoff an aliphatische Doppelbindung förderndem Katalysator (3) umgesetzt wird, wobei das eingesetzte Verhältnis von aliphatischer Doppelbindung in organischer Verbindung (1) zu Si-gebundenem Wasserstoff im Organopolysiloxan (2) 1,5 : 1 bis 20 : 1 beträgt, mit der Maßgabe, daß die Umsetzung von einem Dien der Formel

$$CH_2=CH-(CH_2)_{a'}-CH=CH_2$$

mit einem Organopolysiloxan der Formel

$$HR'_2SiO-[R'_2SiO]_{b'}-SiR'_2H$$

wobei R', a' und b' die in Anspruch 6 angegebene Bedeutung haben, in Gegenwart des Katalysators (3) ausgeschlossen ist.

**8.** Verfahren nach Anspruch 7, dadurch gekennzeichnet, daß als organische Verbindung (1) 1,2,4-Trivinylcyclohexan verwendet wird.

**9.** Verfahren nach Anspruch 7 oder 8, dadurch gekennzeichnet, daß als Organopolysiloxan (2) solches der allgemeinen Formel

$$H_dR_{3-d}SiO(SiR_2O)_o(SiRHO)_pSiR_{3-d}H_d \quad (VII),$$

wobei

R gleiche oder verschiedene, gegebenenfalls halogenierte Kohlenwasserstoffreste mit 1 bis 18 Kohlenstoffatomen je Rest,
d 0 oder 1,
o 0 oder eine ganze Zahl von 1 bis 1000 und
p eine ganze Zahl von 1 bis 6 bedeutet,

verwendet wird.

**10.** Verfahren nach Anspruch 7, 8 oder 9, dadurch gekennzeichnet, daß das so erhaltene Alkenylgruppen aufweisende Siloxancopolymer mit Organopolysiloxan (4), ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten, equilibriert wird.

**Patentansprüche für folgenden Vertragsstaat : ES**

**1.** Verwendung von vernetzbaren Zusammensetzungen enthaltend

(A) Alkenylgruppen aufweisende Siloxancopolymere enthaltend

(a) Siloxaneinheiten der Formel

$$R_aSi(OR^1)_bO_{\frac{4-(a+b)}{2}} \quad (I),$$

wobei

R gleiche oder verschiedene, gegebenfalls halogenierte Kohlenwasserstoffreste mit 1 bis 18 Kohlenstoffatomen je Rest,
$R^1$ gleiche oder verschiedene Alkylreste mit 1 bis 4 Kohlenstoffatomen je Rest, die durch ein Ethersauerstoffatom substituiert sein können, bedeutet, a 0, 1, 2 oder 3,
b 0, 1, 2 oder 3

und die Summe a+b nicht größer als 3 ist,

(b) je Molekül mindestens eine Siloxaneinheit der Formel

$$AR_cSiO_{\frac{4-(c+1)}{2}} \quad (II),$$

wobei

R die oben dafür angegebene Bedeutung hat,
c 0, 1 oder 2 ist,
A einen Rest der Formel

$$-CH_2CHR^3-R^2(CR^3=CH_2)_{x-1}$$

wobei

$R^2$ einen zweiwertigen, dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 2, 3 oder 4 bedeutet,

und

(c) je Molekül durchschnittlich mindestens eine Einheit, ausgewählt aus der Gruppe von Einheiten der Formeln

$$O_{\frac{4-(c+1)}{2}}R_cSi\text{-}A^1\text{-}SiR_cO_{\frac{4-(c+1)}{2}} \qquad \text{(III)},$$

$$\begin{array}{l} O_{\frac{4-(c+1)}{2}}R_cSi\text{-}A^2\text{-}SiR_cO_{\frac{4-(c+1)}{2}} \\ \qquad\qquad\quad\;\; | \\ \qquad\qquad\quad SiR_cO_{\frac{4-(c+1)}{2}} \end{array} \qquad \text{(IV)}$$

und

$$\begin{array}{l} \qquad\qquad\quad SiR_cO_{\frac{4-(c+1)}{2}} \\ \qquad\qquad\quad\;\; | \\ O_{\frac{4-(c+1)}{2}}R_c\,Si\text{-}A^3\text{-}SiR_cO_{\frac{4-(c+1)}{2}} \\ \qquad\qquad\quad\;\; | \\ \qquad\qquad\quad SiR_cO_{\frac{4-(c+1)}{2}} \end{array} \qquad \text{(V)},$$

wobei

R und c die oben dafür angegebene Bedeutung haben,

$A^1$ einen Rest der Formel

$$\begin{array}{c} \qquad\qquad (CR^3{=}CH_2)_{x-2} \\ \qquad | \\ -CH_2CHR^3\text{-}R^2\text{-}CHR^3CH_2- \end{array}$$

wobei

$R^2$, $R^3$ und x die oben dafür angegebene Bedeutung haben,

$A^2$ einen Rest der Formel

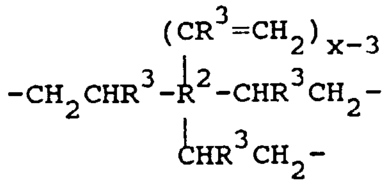,

wobei

$R^2$, $R^3$ und x die oben dafür angegebene Bedeutung haben, mit der Maßgabe, daß $R^2$ kein zweiwertiger Kohlenwasserstoffrest ist, und

$A^3$ einen Rest der Formel

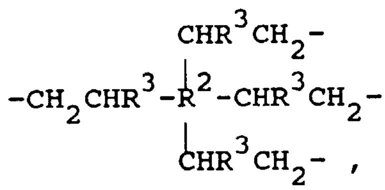,

wobei

$R^2$ und $R^3$ die oben dafür angegebene Bedeutung haben, mit der Maßgabe, daß $R^2$ kein zweiwertiger oder dreiwertiger Rest ist, bedeutet,
mit der Maßgabe, daß die Alkenylgruppen aufweisenden Siloxancopolymere eine Viskosität von höchstens 500000 mPa·s bei 25°C und durchschnittlich mindestens zwei Alkenylgruppen je Molekül der Formel

$$-CR^3=CH_2 ,$$

wobei

$R^3$ die oben dafür angegebene Bedeutung hat,

aufweisen,

(B) Si-gebundene Wasserstoffatome aufweisende Organopolysiloxane und

(C) die Anlagerung von Si-gebundenem Wasserstoff an aliphatische Doppelbindung fördernde Katalysatoren zur Herstellung von klebrige Stoffe abweisenden Überzügen.

**2.** Verwendung von vernetzbaren Zusammensetzungen nach Anspruch 1, dadurch gekennzeichnet, daß
(D) Inhibitoren
enthalten sind.

**3.** Verwendung von vernetzbaren Zusammensetzungen nach Anspruch 1 oder 2, dadurch gekennzeichnet, daß als (A) Alkenylgruppen aufweisende Siloxancopolyere solche verwendet werden, die enthalten

(a) Siloxaneinheiten der Formel

$$R_2SiO \qquad (I')$$

(b) je Molekül durchschnittlich mehr als eine Siloxaneinheit der Formel

$$AR_2SiO_{1/2} \qquad (II')$$

und

(c) je Molekül durchschnittlich mindestens eine Einheit, ausgewählt aus der Gruppe von Einheiten der Formeln

$$O_{1/2}R_2Si\text{-}A^1\text{-}SiR_2O_{1/2} \qquad (III')$$

und

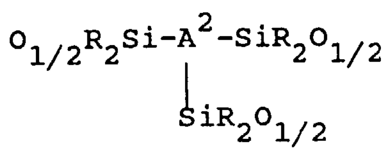

(IV') ,

wobei

R gleiche oder verschiedene, gegebenenfalls halogenierte Kohlenwasserstoffreste mit 1 bis 18 Kohlenstoffatomen je Rest,
A einen Rest der Formel

$$-CH_2CHR^3\text{-}R^2(CHR^3{=}CH_2)_{x-1}$$

wobei
$R^2$ einen zweiwertigen, dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 2, 3 oder 4 bedeutet,
$A^1$ einen Rest der Formel

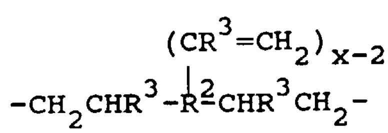

,

wobei
$R^2$, $R^3$ und x die oben dafür angegebene Bedeutung haben und
$A^2$ einen Rest der Formel

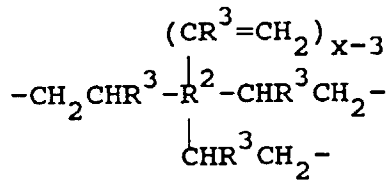

,

wobei
$R^2$, $R^3$ und x die oben dafür angegebene Bedeutung haben, mit der Maßgabe, daß R2 kein zweiwertiger Kohlenwasserstoffrest ist, bedeutet, mit der Maßgabe, daß die Alkenylgruppen aufweisenden Siloxancopolymere eine Viskosität von höchstens 500000 mPa·s bei 25°C und durchschnittlich mindestens zwei Alkenylgruppen je Molekül der Formel

$$-CR^3=CH_2,$$

wobei
$R^3$ die oben dafür angegebene Bedeutung hat, aufweisen.

**4.** Verwendung von vernetzbaren Zusammensetzungen nach Anspruch 1, 2 oder 3, dadurch gekennzeichnet, daß als (A) Alkenylgruppen aufweisende Siloxancopolymere solche verwendet werden, bei denen der Rest $R^3$ ein Wasserstoffatom ist.

**5.** Verfahren zur Herstellung von Alkenylgruppen aufweisenden Siloxancopolymeren enthaltend

(a) Siloxaneinheiten der Formel

$$R_aSi(OR^1)_bO_{\frac{4-(a+b)}{2}} \qquad (I),$$

wobei

R gleiche oder verschiedene, gegebenfalls halogenierte Kohlenwasserstoffreste mit 1 bis 18 Kohlenstoffatomen je Rest,
$R^1$ gleiche oder verschiedene Alkylreste mit 1 bis 4 Kohlenstoffatomen je Rest, die durch ein Ethersauerstoffatom substituiert sein können, bedeutet,
a 0, 1, 2 oder 3,
b 0, 1, 2 oder 3

und die Summe a+b nicht größer als 3 ist,

(b) je Molekül mindestens eine Siloxaneinheit der Formel

$$AR_cSiO_{\frac{4-(c+1)}{2}} \qquad (II),$$

wobei

R die oben dafür angegebene Bedeutung hat, c 0, 1 oder 2 ist,
A einen Rest der Formel

$$-CH_2CHR^3-R^2(CR^3=CH_2)_{x-1}$$

wobei
$R^2$ einen zweiwertigen, dreiwertigen oder vierwertigen Kohlenwasserstoffrest mit 1 bis 25 Kohlenstoffatomen je Rest,
$R^3$ ein Wasserstoffatom oder einen Alkylrest mit 1 bis 6 Kohlenstoffatomen je Rest und
x 2, 3 oder 4 bedeutet,

und

(c) je Molekül durchschnittlich mindestens eine Einheit, ausgewählt aus der Gruppe von Einheiten der Formeln

$$O_{\frac{4-(c+1)}{2}}R_cSi\text{-}A^1\text{-}SiR_cO_{\frac{4-(c+1)}{2}} \qquad \text{(III)},$$

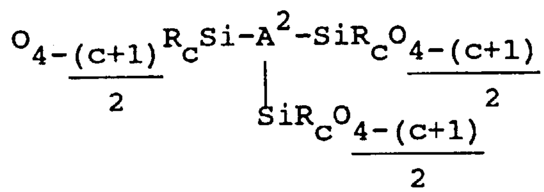
(IV)

und

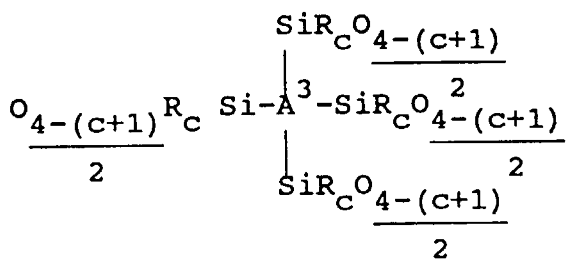
(V),

wobei

R und c die oben dafür angegebene Bedeutung haben,

A1 einen Rest der Formel

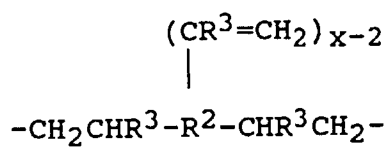

wobei

$R^2$, $R^3$ und x die oben dafür angegebene Bedeutung haben,

$A^2$ einen Rest der Formel

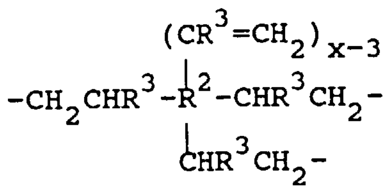

,

wobei

$R^2$, $R^3$ und x die oben dafür angegebene Bedeutung haben, mit der Maßgabe, daß R2 kein zweiwertiger Kohlenwasserstoffrest ist, und

$A^3$ einen Rest der Formel

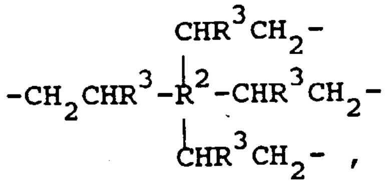

,

wobei

$R^2$ und $R^3$ die oben dafür angegebene Bedeutung haben, mit der Maßgabe, daß $R^2$ kein zweiwertiger oder dreiwertiger Rest ist, bedeutet,
mit der Maßgabe, daß die Alkenylgruppen aufweisenden Siloxancopolymere eine Viskosität von höchstens 500000 mPa·s bei 25°C und durchschnittlich mindestens zwei Alkenylgruppen je Molekül der Formel

$$-CR^3=CH_2 ,$$

wobei

$R^3$ die oben dafür angegebene Bedeutung hat, aufweisen, und mit der Maßgabe, daß lineare Organopolysiloxane aus folgenden wiederkehrenden Einheiten

$$-[CH_2]_{a'}-[R'_2SiO]_{b'}-R'_2Si-$$

wobei

R' eine gesättigte aliphatische oder aromatische Gruppe ist und jedes R' gleich oder verschieden sein kann,
a' 5 bis 100 und b' 1 bis 1000 bedeutet und die Organopolysiloxane am $-[CH_2]_{a'}$-Ende mit $-CH=CH_2$ oder Wasserstoff und am $-R'_2Si$-Ende mit $-[CH_2]_{a'}-CH=CH_2$ oder Wasserstoff beendet sind, wobei wenigstens eine $-CH=CH_2$ Gruppe anwesend ist, ausgeschlossen sind, durch Umsetzung von mindestens zwei aliphatische Doppelbindungen aufweisende organische Verbindung (1) der allgemeinen Formel

$$R^2(CR^3=CH_2)_x,$$

wobei

$R^2$ einen zweiwertigen, dreiwertigen oder vierwertigen Kohlenwasserstoffrest mit 1 bis 25 Kohlenstoffato-

men je Rest,

$R^3$ ein Wasserstoffatom oder einen Alkylrest mit 1 bis 6 Kohlenstoffatomen je Rest und

x 2, 3 oder 4 bedeutet,
mit Organopolysiloxan (2) mit durchschnittlich mehr als einem Si-gebundenen Wasserstoffatom je Molekül in Gegenwart von die Anlagerung von Si-gebundenem Wasserstoff an aliphatische Doppelbindung förderndem Katalysator (3), wobei das eingesetzte Verhältnis von aliphatischer Doppelbindung in organischer Verbindung (1) zu Si-gebundenem Wasserstoff im Organopolysiloxan (2) 1,5 : 1 bis 20 : 1 beträgt, mit der Maßgabe, daß die Umsetzung von einem Dien der Formel

$$CH_2=CH-(CH_2)_{a'}-CH=CH_2$$

mit einem Organopolysiloxan der Formel

$$HR'_2SiO-[R'_2SiO]_{b'}-SiR'_2H$$

wobei

R', a' und b' die oben dafür angegebene Bedeutung haben, in Gegenwart des Katalysators (3) ausgeschlossen ist.

6. Verfahren nach Anspruch 5, dadurch gekennzeichnet, daß als organische Verbindung (1) 1,2,4-Trivinylcyclohexan verwendet wird.

7. Verfahren nach Anspruch 5 oder 6, dadurch gekennzeichnet, daß als Organopolysiloxan (2) solches der allgemeinen Formel

$$H_dR_{3-d}SiO(SiR_2O)_o(SiRHO)_pSiR_{3-d}H_d \qquad (VII),$$

wobei

R gleiche oder verschiedene, gegebenenfalls halogenierte Kohlenwasserstoffreste mit 1 bis 18 Kohlenstoffatomen je Rest,
d 0 oder 1,
o 0 oder eine ganze Zahl von 1 bis 1000 und
p eine ganze Zahl von 1 bis 6 bedeutet,

verwendet wird.

8. Verfahren nach Anspruch 5, 6 oder 7, dadurch gekennzeichnet, daß das so erhaltene Alkenylgruppen aufweisende Siloxancopolymer mit Organopolysiloxan (4), ausgewählt aus der Gruppe bestehend aus linearen, endständige Triorganosiloxygruppen aufweisenden Organopolysiloxanen, linearen, endständige Hydroxylgruppen aufweisenden Organopolysiloxanen, cyclischen Organopolysiloxanen und Mischpolymerisaten aus Diorganosiloxan- und Monoorganosiloxaneinheiten, equilibriert wird.

## Claims

**Claims for the following Contracting States : AT, BE, CH, DE, FR, GB, IT, LI, NL, SE**

1. Crosslinkable compositions comprising

(A) siloxane copolymers containing alkenyl groups, comprising

(a) siloxane units of the formula

$$R_aSi(OR^1)_bO_{\frac{4-(a+b)}{2}} \quad (I)$$

in which

R denotes identical or different, optionally halogenated hydrocarbon radicals having 1 to 18 carbon atoms per radical,
$R^1$ denotes identical or different alkyl radicals having 1 to 4 carbon atoms per radical, which can be substituted by an ether oxygen atom,
a is 0, 1, 2 or 3,
b is 0, 1, 2 or 3

and the sum of a+b is not greater than 3,
(b) at least one siloxane unit, per molecule, of the formula

$$AR_cSiO_{\frac{4-(c+1)}{2}} \quad (II)$$

in which

R has the meaning given above for this symbol,
c is 0, 1 or 2 and
A denotes a radical of the formula

$$-CH_2CHR^3-R^2(CR^3=CH_2)_{x-1}$$

in which
$R^2$ denotes a divalent, trivalent or tetravalent hydrocarbon radical having 1 to 25 carbon atoms per radical,
$R^3$ denotes a hydrogen atom or an alkyl radical having 1 to 6 carbon atoms per radical and
x denotes 2, 3 or 4,

and
(c) on average at least one unit, per molecule, chosen from the group comprising units of the formulae

$$O_{\frac{4-(c+1)}{2}}R_cSi-A^1-SiR_cO_{\frac{4-(c+1)}{2}} \quad (III)$$

$$O_{\frac{4-(c+1)}{2}}R_cSi-A^2(-SiR_cO_{\frac{4-(c+1)}{2}})-SiR_cO_{\frac{4-(c+1)}{2}} \quad (IV)$$

and

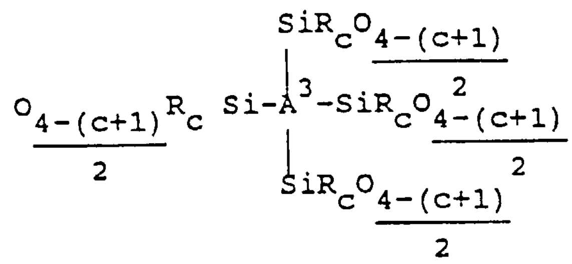 (V)

in which

R and c have the meaning given above for these symbols,
$A^1$ denotes a radical of the formula

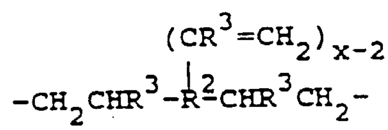

in which $R^2$, $R^3$ and x have the meaning given above for these symbols,
$A^2$ denotes a radical of the formula

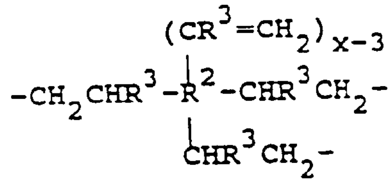

in which
$R^2$, $R^3$ and x have the meaning given above for these symbols, with the proviso that $R^2$ is not a divalent hydrocarbon radical, and
$A^3$ is a radical of the formula

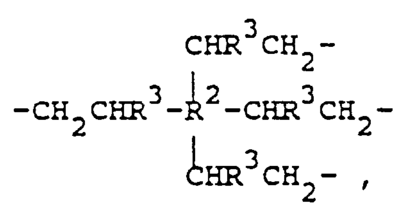

in which
$R^2$ and $R^3$ have the meaning given above for these symbols, with the proviso that $R^2$ is not a divalent or trivalent radical, with the proviso that the siloxane copolymers containing alkenyl groups have a viscosity of at most 500,000 mPa.s at 25°C and on average at least two alkenyl groups, per molecule, of the formula

$$-CR^3=CH_2$$

in which
$R^3$ has the meaning given above for this symbol,

(B) organopolysiloxanes containing Si-bonded hydrogen atoms and
(C) catalysts which promote the addition of Si-bonded hydrogen onto an aliphatic double bond.

2. Crosslinkable compositions according to Claim 1, characterized in that (D) inhibitors are contained.

3. Crosslinkable compositions according to Claim 1 or 2, characterized in that (A) siloxane copolymers containing alkenyl groups used are those which comprise

(a) siloxane units of the formula

$$R_2SiO \qquad (I')$$

(b) on average more than one siloxane unit, per molecule, of the formula

$$AR_2SiO_{1/2} \qquad (II')$$

and
(c) on average at least one unit, per molecule, chosen from the group comprising units of the formulae

$$O_{1/2}R_2Si\text{-}A^1\text{-}SiR_2O_{1/2} \qquad (III')$$

and

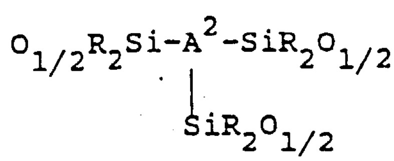

(IV')

in which

R are identical or different, optionally halogenated hydrocarbon radicals having 1 to 18 carbon atoms per radical,
A denotes a radical of the formula

$$-CH_2CHR^3\text{-}R^2(CHR^3{=}CH_2)_{x-1}$$

in which
$R^2$ denotes a divalent, trivalent or tetravalent hydrocarbon radical having 1 to 25 carbon atoms per radical,
$R^3$ denotes a hydrogen atom or an alkyl radical having 1 to 6 carbon atoms per radical and
x denotes 2, 3 or 4,
$A^1$ denotes a radical of the formula

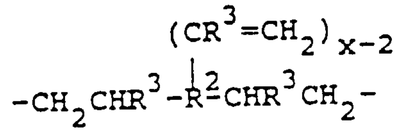

,

in which
$R^2$, $R^3$ and x have the meaning given above for these symbols and
$A^2$ denotes a radical of the formula

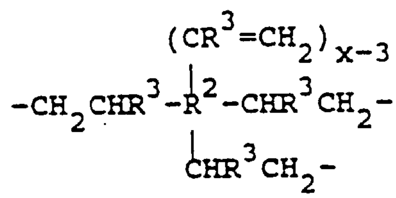
,

in which
$R^2$, $R^3$ and x have the meaning given above for these symbols, with the proviso that R2 [sic] is not a divalent hydrocarbon radical, with the proviso that the siloxane copolymers containing alkenyl groups have a viscosity of at most 500,000 mPa.s at 25°C and on average at least two alkenyl groups, per molecule, of the formula

$$-CR^3{=}CH_2$$

in which
$R^3$ has the meaning given above for this symbol.

**4.** Crosslinkable compositions according to Claim 1, 2 or 3, characterized in that (A) siloxane copolymers containing alkenyl groups used are those in which the radical $R^3$ is a hydrogen atom.

**5.** Use of the compositions according to one of Claims 1 to 4 for the production of non-stick coatings.

**6.** Siloxane copolymers containing alkenyl groups, comprising

(a) siloxane units of the formula

$$R_aSi(OR^1)_bO_{\frac{4-(a+b)}{2}} \quad (I)$$

in which

R denotes identical or different, optionally halogenated hydrocarbon radicals having 1 to 18 carbon atoms per radical,
$R^1$ denotes identical or different alkyl radicals having 1 to 4 carbon atoms per radical, which can be substituted by an ether oxygen atom,
a is 0, 1, 2 or 3,
b is 0, 1, 2 or 3

and the sum of a+b is not greater than 3,
(b) at least one siloxane unit, per molecule, of the formula

$$AR_cSiO_{\frac{4-(c+1)}{2}} \quad (II)$$

in which

R has the meaning given above for this symbol,
c is 0, 1 or 2 and
A denotes a radical of the formula

$$-CH_2CHR^3-R^2(CR^3=CH_2)_{x-1}$$

in which
$R^2$ denotes a divalent, trivalent or tetravalent hydrocarbon radical having 1 to 25 carbon atoms per radical,
$R^3$ denotes a hydrogen atom or an alkyl radical having 1 to 6 carbon atoms per radical and
x denotes 2, 3 or 4,

and
(c) on average at least one unit, per molecule, chosen from the group comprising units of the formulae

$$O_{\frac{4-(c+1)}{2}}R_cSi-A^1-SiR_cO_{\frac{4-(c+1)}{2}} \qquad (III)$$

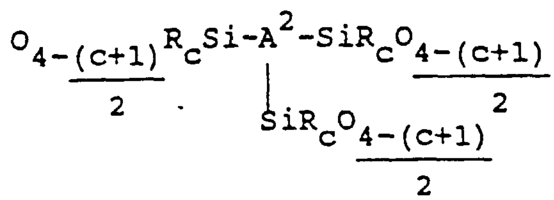

(IV)

and

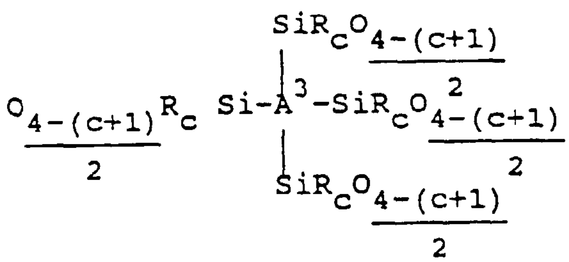

(V)

in which

R and c have the meaning given above for these symbols,
A1 [sic] denotes a radical of the formula

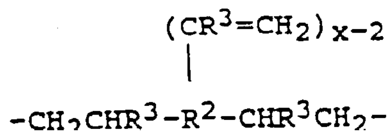

in which
$R^2$, $R^3$ and x have the meaning given above for these symbols,
$A^2$ denotes a radical of the formula

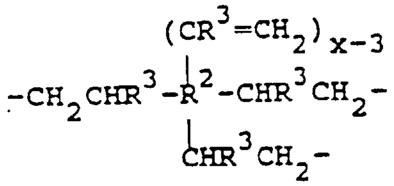

in which
$R^2$, $R^3$ and x have the meaning given above for these symbols, with the proviso that R2 [sic] is not a divalent hydrocarbon radical, and
$A^3$ is a radical of the formula

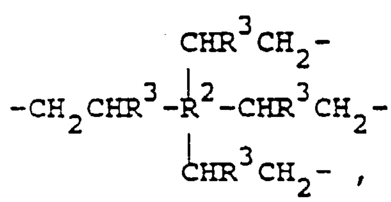

in which
$R^2$ and $R^3$ have the meaning given above for these symbols, with the proviso that $R^2$ is not a divalent or trivalent hydrocarbon radical, with the proviso that the siloxane copolymers containing alkenyl groups have a viscosity of at most 500,000 mPa.s at 25°C and on average at least two alkenyl groups, per molecule, of the formula

$$-CR^3=CH_2$$

in which
$R^3$ has the meaning given above for this symbol, and with the proviso that linear organopolysiloxanes comprising the following recurring units

$$-[CH_2]_{a'}-[R'_2SiO]_{b'}-R'_2Si-$$

in which
R' is a saturated aliphatic or aromatic group and each R' can be identical or different, a' denotes 5 to 100 and b' denotes 1 to 1000 and the organopolysiloxanes are terminated at the $-[CH_2]_{a'}$ end by $-CH=CH_2$ or hydrogen and at the $-R'_2Si$ end by $-[CH_2]_{a'}-CH=CH_2$ or hydrogen, at least one $-CH=CH_2$ group being present, are excluded.

**7.** Process for the preparation of the siloxane copolymers containing alkenyl groups according to Claim 6, characterized in that an organic compound (1) containing at least two aliphatic double bonds, of the general formula

$$R^2(CR^3=CH_2)_x$$

in which

$R^2$ denotes a divalent, trivalent or tetravalent hydrocarbon radical having 1 to 25 carbon atoms per radical,
$R^3$ denotes a hydrogen atom or an alkyl radical having 1 to 6 carbon atoms per radical and
x denotes 2, 3 or 4,

is reacted with an organopolysiloxane (2) having on average more than one Si-bonded hydrogen atom per molecule, in the presence of a catalyst (3) which promotes the addition of Si-bonded hydrogen onto an aliphatic double bond, the ratio employed between the aliphatic double bond in the organic compound (1) and the Si-bonded hydrogen in the organopolysiloxane (2) being 1.5 : 1 to 20 : 1, with the proviso that the reaction of a diene of the formula

$$CH_2{=}CH\text{-}(CH_2)_{a'}\text{-}CH{=}CH_2$$

with an organopolysiloxane of the formula

$$HR'_2SiO\text{-}[R'_2SiO]_{b'}\text{-}SiR'_2H$$

in which R', a' and b' have the meaning given in Claim 6, in the presence of the catalyst (3) is excluded.

**8.** Process according to Claim 7, characterized in that 1,2,4-trivinylcyclohexane is used as the organic compound (1).

**9.** Process according to Claim 7 or 8, characterized in that the organopolysiloxane (2) used is an organopolysiloxane of the general formula

$$H_dR_{3-d}SiO(SiR_2O)_o(SiRHO)_pSiR_{3-d}H_d \qquad (VII)$$

in which

R denotes identical or different, optionally halogenated hydrocarbon radicals having 1 to 18 carbon atoms per radical,
d denotes 0 or 1,
o denotes 0 or an integer from 1 to 1000 and
p denotes an integer from 1 to 6.

**10.** Process according to Claim 7, 8 or 9, characterized in that the siloxane copolymer containing alkenyl groups thus obtained is equilibrated with an organopolysiloxane (4) chosen from the group comprising linear organopolysiloxanes containing terminal triorganosiloxy groups, linear organopolysiloxanes containing terminal hydroxyl groups, cyclic organopolysiloxanes and copolymers of diorganosiloxane and monoorganosiloxane units.

**Claims for the following Contracting State : ES**

**1.** Use of crosslinkable compositions comprising

(A) siloxane copolymers containing alkenyl groups, comprising

(a) siloxane units of the formula

$$R_aSi(OR^1)_bO_{\frac{4-(a+b)}{2}} \qquad (I)$$

in which

R denotes identical or different, optionally halogenated hydrocarbon radicals having 1 to 18 carbon atoms per radical,
$R^1$ denotes identical or different alkyl radicals having 1 to 4 carbon atoms per radical, which can be substituted by an ether oxygen atom,
a is 0, 1, 2 or 3,
b is 0, 1, 2 or 3

and the sum of a+b is not greater than 3,
(b) at least one siloxane unit, per molecule, of the formula

$$AR_cSiO_{\frac{4-(c+1)}{2}} \quad (II)$$

in which

R has the meaning given above for this symbol,
c is 0, 1 or 2 and
A denotes a radical of the formula

$$-CH_2CHR^3-R^2(CR^3=CH_2)_{x-1}$$

in which
$R^2$ denotes a divalent, trivalent or tetravalent hydrocarbon radical having 1 to 25 carbon atoms per radical,
$R^3$ denotes a hydrogen atom or an alkyl radical having 1 to 6 carbon atoms per radical and
x denotes 2, 3 or 4,

and
(c) on average at least one unit, per molecule, chosen from the group comprising units of the formulae

$$O_{\frac{4-(c+1)}{2}}R_cSi-A^1-SiR_cO_{\frac{4-(c+1)}{2}} \quad (III)$$

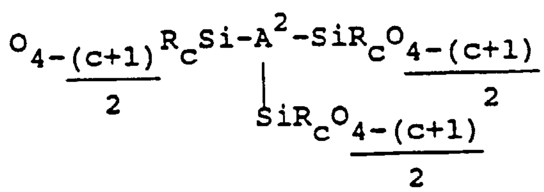 (IV)

and

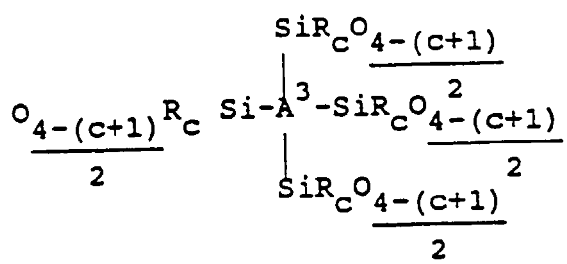 (V)

in which

R and c have the meaning given above for these symbols,
$A^1$ denotes a radical of the formula

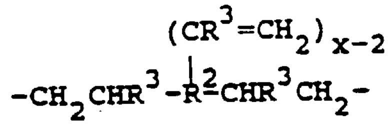

in which
$R^2$, $R^3$ and x have the meaning given above for these symbols,
$A^2$ denotes a radical of the formula

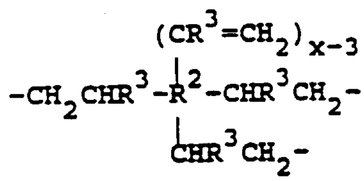

,

in which
$R^2$, $R^3$ and x have the meaning given above for these symbols, with the proviso that $R^2$ is not a divalent hydrocarbon radical, and
$A^3$ is a radical of the formula

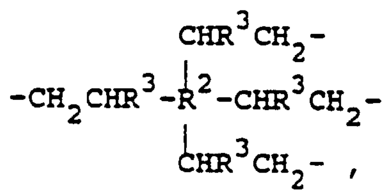

in which
$R^2$ and $R^3$ have the meaning given above for these symbols, with the proviso that $R^2$ is not a divalent or trivalent radical,
with the proviso that the siloxane copolymers containing alkenyl groups have a viscosity of at most 500,000 mPa.s at 25°C and on average at least two alkenyl groups, per molecule, of the formula

$$-CR^3=CH_2$$

in which
$R^3$ has the meaning given above for this symbol,

(B) organopolysiloxanes containing Si-bonded hydrogen atoms and
(C) catalysts which promote the addition of Si-bonded hydrogen onto an aliphatic double bond for the production of non-stick coatings.

**2.** Use of crosslinkable compositions according to Claim 1, characterized in that
(D) inhibitors
are contained.

**3.** Use of crosslinkable compositions according to Claim 1 or 2, characterized in that (A) siloxane copolymers containing alkenyl groups used are those which comprise

(a) siloxane units of the formula

$$R_2SiO \qquad (I')$$

(b) on average more than one siloxane unit, per molecule, of the formula

$$AR_2SiO_{1/2} \qquad (II')$$

and

(c) on average at least one unit, per molecule, chosen from the group comprising units of the formulae

$$O_{1/2}R_2Si\text{-}A^1\text{-}SiR_2O_{1/2} \qquad (III')$$

and

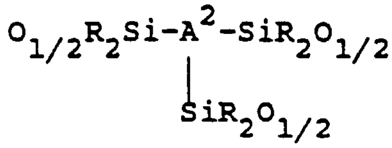

(IV')

in which

R denotes identical or different, optionally halogenated hydrocarbon radicals having 1 to 18 carbon atoms per radical,
A denotes a radical of the formula

$$-CH_2CHR^3\text{-}R^2(CHR^3=CH_2)_{x-1}$$

in which
$R^2$ denotes a divalent, trivalent or tetravalent hydrocarbon radical having 1 to 25 carbon atoms per radical,
$R^3$ denotes a hydrogen atom or an alkyl radical having 1 to 6 carbon atoms per radical and
x denotes 2, 3 or 4,
$A^1$ denotes a radical of the formula

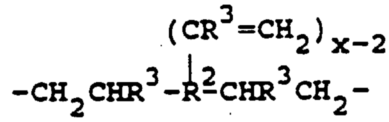

,

in which
$R^2$, $R^3$ and x have the meaning given above for these symbols and
$A^2$ denotes a radical of the formula

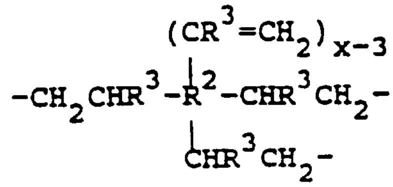

,

in which

$R^2$, $R^3$ and x have the meaning given above for these symbols, with the proviso that R2 [sic] is not a divalent hydrocarbon radical, with the proviso that the siloxane copolymers containing alkenyl groups have a viscosity of at most 500,000 mPa.s at 25°C and on average at least two alkenyl groups, per molecule, of the formula

$$-CR^3=CH_2$$

in which
$R^3$ has the meaning given above for this symbol.

**4.** Use of crosslinkable compositions according to Claim 1, 2 or 3, characterized in that (A) siloxane copolymers containing alkenyl groups used are those in which the radical $R^3$ is a hydrogen atom.

**5.** Process for the preparation of siloxane copolymers containing alkenyl groups, comprising

(a) siloxane units of the formula

$$R_aSi(OR^1)_bO_{\frac{4-(a+b)}{2}} \quad (I)$$

in which

R denotes identical or different, optionally halogenated hydrocarbon radicals having 1 to 18 carbon atoms per radical,
$R^1$ denotes identical or different alkyl radicals having 1 to 4 carbon atoms per radical, which can be substituted by an ether oxygen atom,
a is 0, 1, 2 or 3,
b is 0, 1, 2 or 3

and the sum of a+b is not greater than 3,
(b) at least one siloxane unit, per molecule, of the formula

$$AR_cSiO_{\frac{4-(c+1)}{2}} \quad (II)$$

in which

R has the meaning given above for this symbol,
c is 0, 1 or 2 and
A denotes a radical of the formula

$$-CH_2CHR^3-R^2(CR^3=CH_2)_{x-1}$$

in which
$R^2$ denotes a divalent, trivalent or tetravalent hydrocarbon radical having 1 to 25 carbon atoms per radical,
$R^3$ denotes a hydrogen atom or an alkyl radical having 1 to 6 carbon atoms per radical and
x denotes 2, 3 or 4,

and
(c) on average at least one unit, per molecule, chosen from the group comprising units of the formulae

$$O_{\frac{4-(c+1)}{2}}R_cSi-A^1-SiR_cO_{\frac{4-(c+1)}{2}} \quad (III)$$

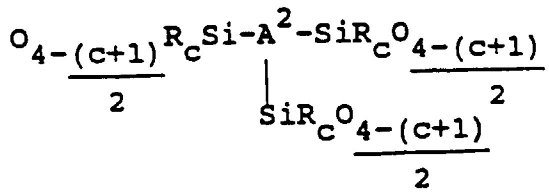 (IV)

and

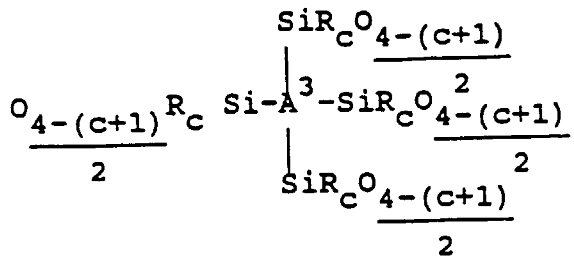 (V)

in which

R and c have the meaning given above for these symbols,
A1 [sic] denotes a radical of the formula

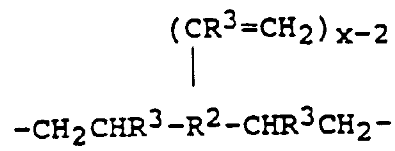

in which
$R^2$, $R^3$ and x have the meaning given above for these symbols,
$A^2$ denotes a radical of the formula

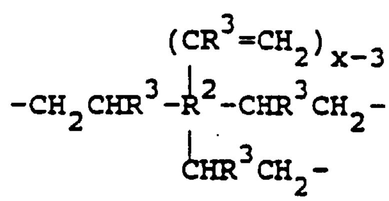 ,

in which
$R^2$, $R^3$ and x have the meaning given above for these symbols, with the proviso that R2 [sic] is not a divalent hydrocarbon radical, and
$A^3$ is a radical of the formula

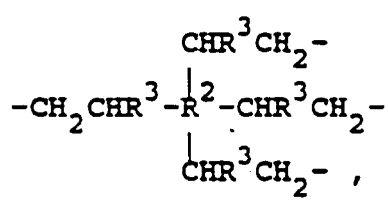 ,

in which
$R^2$ and $R^3$ have the meaning given above for these symbols, with the proviso that $R^2$ is not a divalent or trivalent radical,
with the proviso that the siloxane copolymers containing alkenyl groups have a viscosity of at most 500,000 mPa.s at 25°C and on average at least two alkenyl groups, per molecule, of the formula

$$-CR^3=CH_2$$

in which
$R^3$ has the meaning given above for this symbol, and with the proviso that linear organopolysiloxanes comprising the following recurring units

$$-[CH_2]_{a'}-[R'_2SiO]_{b'}-R'_2Si-$$

in which
R' is a saturated aliphatic or aromatic group and each R' can be identical or different,
a' denotes 5 to 100 and b' denotes 1 to 1000 and the organopolysiloxanes are terminated at the $-[CH_2]_{a'}$ end by $-CH=CH_2$ or hydrogen and at the $-R'_2Si$ end by $-[CH_2]_{a'}-CH=CH_2$ or hydrogen, at least one $-CH=CH_2$ group being present, are excluded, by reaction of an organic compound (1) containing at least two aliphatic double bonds, of the general formula

$$R^2(CR^3=CH_2)_x$$

in which
$R^2$ denotes a divalent, trivalent or tetravalent hydrocarbon radical having 1 to 25 carbon atoms per radical,
$R^3$ denotes a hydrogen atom or an alkyl radical having 1 to 6 carbon atoms per radical and
x denotes 2, 3 or 4,
with an organopolysiloxane (2) having on average more than one Si-bonded hydrogen atom per molecule, in the presence of a catalyst (3) which promotes the addition of Si-bonded hydrogen onto an aliphatic double bond, the ratio employed between the aliphatic double bond in the organic compound (1) and the Si-bonded hydrogen in the organopolysiloxane (2) being 1.5 : 1 to 20 : 1, with the proviso that the reaction of a diene of the formula

$$CH_2=CH-(CH_2)_{a'}-CH=CH_2$$

with an organopolysiloxane of the formula

$$HR'_2SiO-[R'_2SiO]_{b'}-SiR'_2H$$

in which
R', a' and b' have the meaning given above for these symbols, in the presence of the catalyst (3) is excluded.

**6.** Process according to Claim 5, characterized in that 1,2,4-trivinylcyclohexane is used as the organic compound (1).

**7.** Process according to Claim 5 or 6, characterized in that the organopolysiloxane (2) used is an organopolysiloxane of the general formula

$$H_dR_{3-d}SiO(SiR_2O)_o(SiRHO)_pSiR_{3-d}H_d \qquad (VII)$$

in which

R denotes identical or different, optionally halogenated hydrocarbon radicals having 1 to 18 carbon atoms per radical,
d denotes 0 or 1,
o denotes 0 or an integer from 1 to 1000 and
p denotes an integer from 1 to 6.

**8.** Process according to Claim 5, 6 or 7, characterized in that the siloxane copolymer containing alkenyl groups thus obtained is equilibrated with an organopolysiloxane (4) chosen from the group comprising linear organopolysiloxanes containing terminal triorganosiloxy groups, linear organopolysiloxanes containing terminal hydroxyl groups, cyclic organopolysiloxanes and copolymers of diorganosiloxane and monoorganosiloxane units.

**Revendications**

**Revendications pour les Etats contractants suivants : AT, BE, CH, DE, FR, GB, IT, LI, NL**

**1.** Compositions réticulables contenant :

(A) des copolymères de siloxane ayant des groupes alcényle, contenant

(a) des unités siloxanes de formule

$$R_aSi(OR^1)_bO_{\frac{4-(a+b)}{2}} \quad (I),$$

où

R représente des radicaux hydrocarbure identiques ou différents, facultativement halogénés, avec 1 à 18 atomes de carbone par radical;
$R^1$ représente des radicaux alcoyle identiques ou différents, avec 1 à 4 atomes de carbone par radical, qui peuvent être substitués par un atome d'oxygène d'éther,
a est 0, 1, 2 ou 3;
b est 0, 1, 2 ou 3, et

la somme a+b n'est pas supérieure à 3;
(b) par molécule, au moins une unité siloxane de formule

$$AR_cSiO_{\frac{4-(c+1)}{2}} \quad (II),$$

où

R a la signification donnée précédemment,
c est 0, 1 ou 2;
A représente un radical de formule

$$-CH_2CHR^3-R^2(CR^3=CH_2)_{x-1}$$

où
$R^2$ représente un radical hydrocarbure bivalent, trivalent ou tétravalent, avec 1 à 25 atomes de carbone par radical,
$R^3$ représente un atome d'hydrogène ou un radical alcoyle avec 1 à 6 atomes de carbone par radical, et
x représente 2, 3 ou 4, et

(c) par molécule, en moyenne au moins une unité, choisie dans le groupe des unités de fomules

$$O_{\frac{4-(c+1)}{2}}R_cSi\text{-}A^1\text{-}SiR_cO_{\frac{4-(c+1)}{2}} \qquad \text{(III)},$$

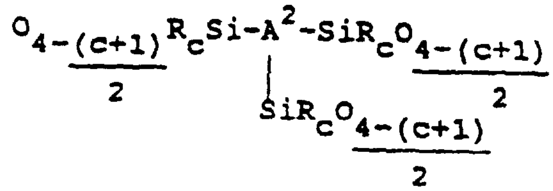

(IV)

et

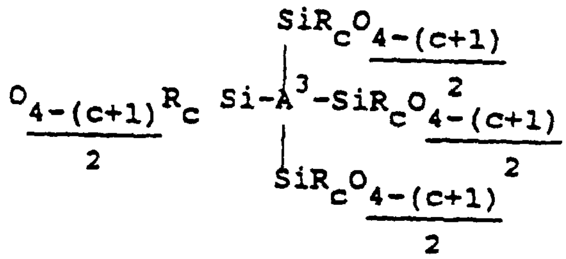

(V),

où

R et c ont les significations données précédemment,
$A^1$ représente un radical de formule

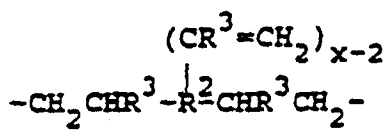

où
$R^2$, $R^3$ et x ont les significations données précédemment,
$A^2$ représente un radical de formule

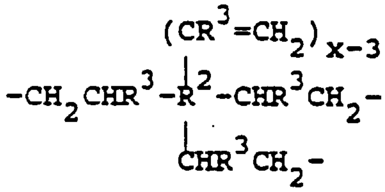

,

où
$R^2$, $R^3$ et x ont les significations données précédemment, avec la condition que $R^2$ n'est pas un radical hydrocarbure bivalent, et
$A^3$ représente un radical de formule

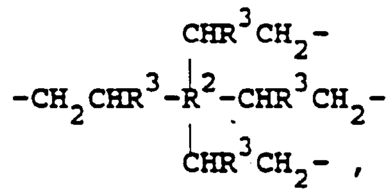 ,

où

$R^2$, $R^3$ et x ont les significations données précédemment, avec la condition que $R^2$ n'est pas un radical hydrocarbure bivalent ou trivalent,

avec la condition que les copolymères de siloxane ayant des groupes alcényle ont une viscosité de au maximum 500 000 mPa·s à 25°C et ont, en moyenne, au moins deux groupes alcényle par molécule de formule

$$-CR^3{=}CH_2,$$

où $R^3$ a la signification donnée précédemment,

(B) des organopolysiloxanes ayant des atomes d'hydrogène à liaison Si, et

(C) des catalyseurs activant l'addition d'hydrogène à liaison Si sur une double liaison aliphatique.

**2.** Compositions réticulables suivant la revendication 1, caractérisées en ce qu'elles contiennent

(D) des inhibiteurs.

**3.** Compositions réticulables suivant la revendication 1 ou 2, caractérisée en ce que l'on utilise comme (A) copolymères de siloxane ayant des groupes alcényle, ceux qui contiennent

(a) des unités siloxane de formule

$$R_2SiO \qquad (I')$$

(b) par molécule, en moyenne plus d'une unité siloxane de formule

$$AR_2SiO_{1/2} \qquad (II')$$

et

(c) par molécule, en moyenne au moins une unité choisie dans le groupe des unités de formules

$$O_{1/2}R_2Si\text{-}A^1\text{-}SiR_2O_{1/2} \qquad (III')$$

et

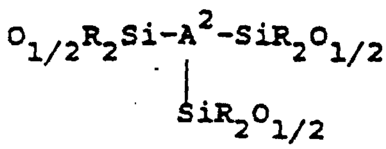 (IV') ,

où

R représente des radicaux hydrocarbure identiques ou différents, facultativement halogénés avec 1 à 18

atomes de carbone par radical,
A représente un radical de formule

$$-CH_2CHR^3-R^2(CR^3=CH_2)_{x-1}$$

où
$R^2$ représente un radical hydrocarbure bivalent, trivalent ou tétravalent, avec 1 à 25 atomes de carbone par radical,
$R^3$ représente un atome d'hydrogène ou un radical alcoyle avec 1 à 6 atomes de carbone par radical, et x représente 2, 3 ou 4;
$A^1$ représente un radical de formule

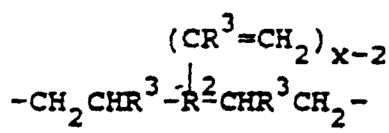
,

où
$R^2$, $R^3$ et x ont les significations données précédemment, et
$A^2$ représente un radical de formule

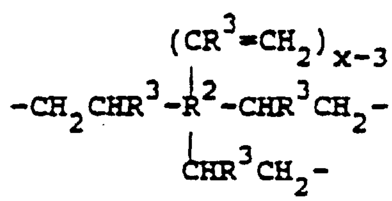
,

où
$R^2$, $R^3$ et x ont les significations données précédemment, avec la condition que $R^2$ n'est pas un radical hydrocarbure bivalent,
avec la condition que les copolymères de siloxane ayant des groupes alcényle présentent une viscosité de au maximum 500 000 mPa·s à 25°C et en moyenne, au moins deux groupes alcényle par molécule de formule

$$-CR^3=CH_2,$$

où
$R^3$ a la signification donnée précédemment.

**4.** Compositions réticulables suivant la revendication 1, 2 ou 3, caractérisées en ce que l'on utilise comme copolymères de siloxane ayant des groupes alcényle (A), ceux dans lesquels le radical $R^3$ est un atome d'hydrogène.

**5.** Utilisation de compositions réticulables suivant l'une quelconque des revendications 1 à 4, dans la préparation de revêtements repoussant les matières collantes.

**6.** Copolymères de siloxane ayant des groupes alcényle, contenant

(a) des unités siloxanes de formule

$$R_aSi(OR^1)_bO_{\frac{4-(a+b)}{2}} \qquad (I),$$

où

R représente des radicaux hydrocarbure identiques ou différents, facultativement halogénés, avec 1 à 18 atomes de carbone par radical;
$R^1$ représente des radicaux alcoyle identiques ou différents, avec 1 à 4 atomes de carbone par radical, qui peuvent être substitués par un atome d'oxygène d'éther,
a est 0, 1, 2 ou 3;
b est 0, 1, 2 ou 3, et

la somme a+b n'est pas supérieure à 3;
(b) par molécule, au moins une unité siloxane de formule

$$AR_cSiO_{\frac{4-(c+1)}{2}} \qquad (II),$$

où

R a la signification donnée précédemment,
c est 0, 1 ou 2;
A représente un radical de formule

$$-CH_2CHR^3-R^2(CR^3=CH_2)_{x-1}$$

où
$R^2$ représente un radical hydrocarbure bivalent, trivalent ou tétravalent, avec 1 à 25 atomes de carbone par radical,
$R^3$ représente un atome d'hydrogène ou un radical alcoyle avec 1 à 6 atomes de carbone par radical, et
x représente 2, 3 ou 4, et

(c) par molécule, en moyenne au moins une unité, choisie dans le groupe des unités de formules

$$O_{\frac{4-(c+1)}{2}}R_cSi-A^1-SiR_cO_{\frac{4-(c+1)}{2}} \qquad (III),$$

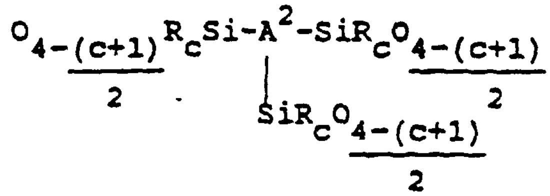

(IV)

et

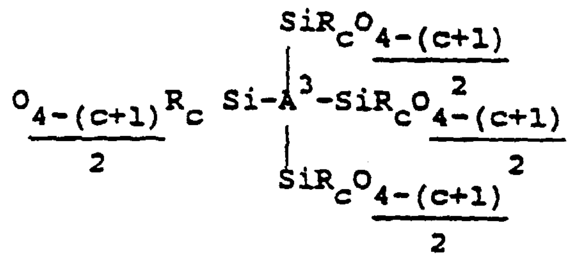

(V),

où

R et c ont les significations données précédemment,

$A^1$ représente un radical de formule

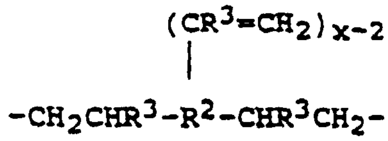

où $R^2$, $R^3$ et x ont les significations données précédemment,

$A^2$ représente un radical de formule

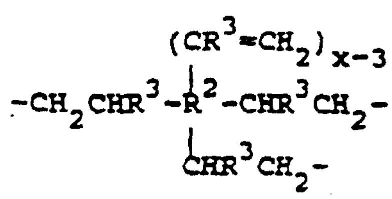

,

où

$R^2$, $R^3$ et x ont les significations données précédemment, avec la condition que $R^2$ n'est pas un radical hydrocarbure bivalent,

$A^3$ représente un radical de formule

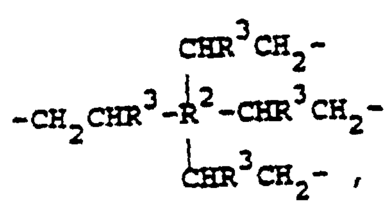

,

où

$R^2$ et $R^3$ ont les significations données précédemment, avec la condition que $R^2$ n'est pas un radical hydrocarbure bivalent ou trivalent,

avec la condition que les copolymères de siloxane ayant des groupes alcényle ont une viscosité de au maximum 500 000 mPa·s à 25°C et ont, en moyenne, au moins deux groupes alcényle par molécule de formule

$$-CR^3{=}CH_2,$$

où

$R^3$ a la signification donnée précédemment, et avec la condition que les organopolysiloxanes linéaires constitués des unités récurrentes suivantes

$$-[CH_2]_{a'}-[R'_2SiO]_{b'}-R'_2Si-$$

où
R' est un groupe aliphatique saturé ou aromatique et chaque R' peut être identique ou différent,
a' représente 5 à 100, et
b' représente 1 à 1000,

et les organopolysiloxanes sur lesquels l'extrémité $-[CH_2]_{a'}-$ se termine par $-CH=CH_2$ ou hydrogène et l'extrémité $-R'_2Si-$ se termine par $-[CH_2]_{a'}-CH=CH_2$ ou hydrogène, où au moins un $CH=CH_2$ est présent, sont exclus.

**7.** Procédé de préparation de copolymères de siloxane ayant des groupes alcényle suivant la revendication 6, caractérisé en ce que l'on fait réagir un composé organique (1) ayant au moins deux doubles liaisons aliphatiques, de formule générale

$$R^2(CR^3=CH_2)_x,$$

où

$R^2$ représente un radical hydrocarbure bivalent, trivalent ou tétravalent, avec 1 à 25 atomes de carbone par radical,
$R^3$ représente un atome d'hydrogène ou un radical alcoyle avec 1 à 6 atomes de carbone par radical, et
x représente 2, 3 ou 4,
avec un organopolysiloxane (2) avec en moyenne, plus d'un atome d'hydrogène à liaison Si par molécule, en présence d'un catalyseur (3) activant l'addition d'hydrogène à liaison Si sur une double liaison aliphatique, où le rapport introduit des doubles liaisons aliphatiques dans le composé organique (1) aux hydrogènes à liaison Si dans l'organopolysiloxane (2) atteint 1,5:1 à 20:1,
avec la condition que la réaction d'un diène de formule

$$CH_2=CH-(CH_2)_{a'}-CH=CH_2$$

avec un organopolysiloxane de formule

$$HR'_2SiO-[R'_2SiO]_{b'}-SiR'_2H$$

où
R', a' et b' ont les significations données à la revendication 6, en présence du catalyseur (3) est exclue.

**8.** Procédé suivant la revendication 7, caractérisé en ce que l'on utilise comme composé organique (1), le 1,2,4-trivinylcyclohexane.

**9.** Procédé suivant la revendication 7 ou 8, caractérisé en ce que l'on utilise comme organopolysiloxane (2), ceux de formule générale

$$H_dR_{3-d}SiO(SiR_2O)_o(SiRHO)_pSiR_{3-d}H_d \quad (VII),$$

où

R représente des radicaux hydrocarbure identiques ou différents, facultativement halogénés, avec 1 à 18 atomes de carbone par radical,

d représente 0 ou 1;
o représente 0 ou un nombre entier de 1 à 1000, et
p représente un nombre entier de 1 à 6.

**10.** Procédé suivant la revendication 7, 8 ou 9, caractérisé en ce que le copolymère de siloxane ayant des groupes alcényle ainsi obtenu est équilibré avec un organopolysiloxane (4), choisi dans le groupe constitué des organopolysiloxanes linéaires, ayant des groupes triorganosiloxy terminaux, des organopolysiloxanes linéaires ayant des groupes hydroxy terminaux, des organopolysiloxanes cycliques et des copolymères d'unités diorganosiloxane et monoorganosiloxane.

**Revendications pour l'Etat contractant suivant : ES**

**1.** Utilisation de compositions réticulables contenant :

(A) des copolymères de siloxane ayant des groupes alcényle, contenant

(a) des unités siloxanes de formule

$$R_aSi(OR^1)_bO_{\frac{4-(a+b)}{2}} \qquad (I),$$

où

R représente des radicaux hydrocarbure identiques ou différents, facultativement halogénés, avec 1 à 18 atomes de carbone par radical;
$R^1$ représente des radicaux alcoyle identiques ou différents, avec 1 à 4 atomes de carbone par radical, qui peuvent être substitués par un atome d'oxygène d'éther,
a est 0, 1, 2 ou 3;
b est 0, 1, 2 ou 3, et

la somme a+b n'est pas supérieure à 3;
(b) par molécule, au moins une unité siloxane de formule

$$AR_cSiO_{\frac{4-(c+1)}{2}} \qquad (II),$$

où

R a la signification donnée précédemment,
c est 0, 1 ou 2;
A représente un radical de formule

$$-CH_2CHR^3-R^2(CR^3=CH_2)_{x-1}$$

où
$R^2$ représente un radical hydrocarbure bivalent, trivalent ou tétravalent, avec 1 à 25 atomes de carbone par radical,
$R^3$ représente un atome d'hydrogène ou un radical alcoyle avec 1 à 6 atomes de carbone par radical, et
x représente 2, 3 ou 4, et

(c) par molécule, en moyenne au moins une unité, choisie dans le groupe des unités de fomules

$$O_{\frac{4-(c+1)}{2}}R_cSi\text{-}A^1\text{-}SiR_cO_{\frac{4-(c+1)}{2}} \qquad \text{(III)},$$

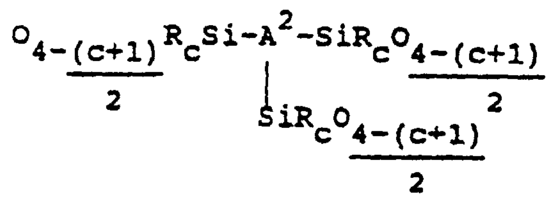

(IV)

et

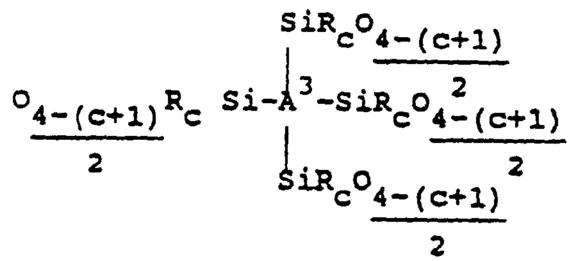

(V),

où

R et c ont les significations données précédemment,

$A^1$ représente un radical de formule

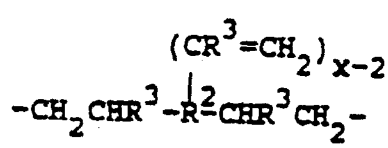

où

$R^2$, $R^3$ et x ont les significations données précédemment,

$A^2$ représente un radical de formule

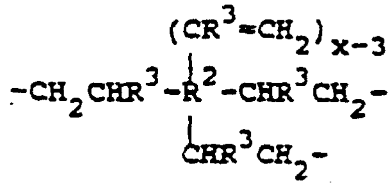

,

où

$R^2$, $R^3$ et x ont les significations données précédemment, avec la condition que $R^2$ n'est pas un radical hydrocarbure bivalent, et

$A^3$ représente un radical de formule

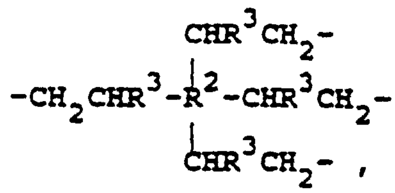

,

où

$R^2$ et $R^3$ ont les significations données précédemment, avec la condition que $R^2$ n'est pas un radical hydrocarbure bivalent ou trivalent,

avec la condition que les copolymères de siloxane ayant des groupes alcényle présentent une viscosité de au maximum 500 000 mPa·s à 25°C et présente, en moyenne, au moins deux groupes alcényle par molécule, de formule

$$-CR^3=CH_2,$$

où $R^3$ a la signification donnée précédemment,

(B) des organopolysiloxanes ayant des atomes d'hydrogène à liaison Si, et

(C) des catalyseurs activant l'addition d'hydrogène à liaison Si sur une double liaison aliphatique, dans la préparation de revêtements repoussant les matières collantes.

**2.** Utilisation de compositions réticulables suivant la revendication 1, caractérisée en ce qu'elles contiennent
(D) des inhibiteurs.

**3.** Utilisation de compositions réticulables suivant la revendication 1 ou 2, caractérisée en ce que l'on utilise comme (A) copolymères de siloxane ayant des groupes alcényle, ceux qui contiennent

(a) des unités siloxane de formule

$$R_2SiO \quad (I')$$

(b) par molécule, en moyenne plus d'une unité siloxane de formule

$$AR_2SiO_{1/2} \quad (II'),$$

et

(c) par molécule, en moyenne au moins une unité choisie dans le groupe des unités de formules

$$O_{1/2}R_2Si\text{-}A^1\text{-}SiR_2O_{1/2} \quad (III')$$

et

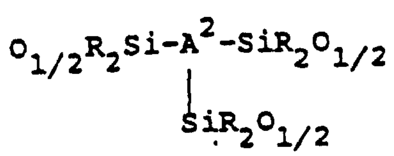

(IV') ,

où

R représente des radicaux hydrocarbure identiques ou différents, facultativement halogénés avec 1 à 18 atomes de carbone par radical,
A représente un radical de formule

$$-CH_2CHR^3-R^2(CR^3=CH_2)_{x-1}$$

où
$R^2$ représente un radical hydrocarbure bivalent, trivalent ou tétravalent, avec 1 à 25 atomes de carbone par radical,
$R^3$ représente un atome d'hydrogène ou un radical alcoyle avec 1 à 6 atomes de carbone par radical, et x représente 2, 3 ou 4;
$A^1$ représente un radical de formule

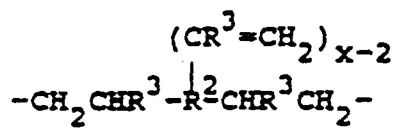
,

où
$R^2$, $R^3$ et x ont les significations données précédemment, et
$A^2$ représente un radical de formule

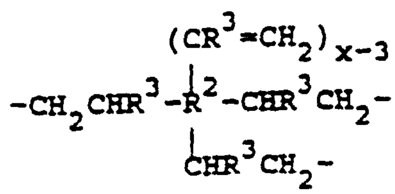
,

où
$R^2$, $R^3$ et x ont les significations données précédemment, avec la condition que $R^2$ n'est pas un radical hydrocarbure bivalent,
avec la condition que les copolymères de siloxane ayant des groupes alcényle présentent une viscosité de au maximum 500 000 mPa·s à 25°C et en moyenne, au moins deux groupes alcényle par molécule, de formule

$$-CR^3=CH_2,$$

où $R^3$ a la signification donnée précédemment.

4. Utilisation de compositions réticulables suivant la revendication 1, 2 ou 3, caractérisée en ce que l'on utilise comme copolymères de siloxane ayant des groupes alcényle (A), ceux dans lesquels le radical $R^3$ est un atome d'hydrogène.

5. Procédé de préparation de copolymères de siloxane ayant des groupes alcényle, contenant

(a) des unités siloxanes de formule

$$R_aSi(OR^1)_bO_{\frac{4-(a+b)}{2}} \quad (I),$$

où

R représente des radicaux hydrocarbure identiques ou différents, facultativement halogénés avec 1 à 18 atomes de carbone par radical;
$R^1$ représente des radicaux alcoyle identiques ou différents, avec 1 à 4 atomes de carbone par radical, qui peuvent être substitués par un atome d'oxygène d'éther,
a est 0, 1, 2 ou 3;
b est 0, 1, 2 ou 3, et

la somme a+b n'est pas supérieure à 3;
(b) par molécule, au moins une unité siloxane de formule

$$AR_cSiO_{\frac{4-(c+1)}{2}} \quad (II),$$

où

R a la signification donnée précédemment,
c est 0, 1 ou 2;
A représente un radical de formule

$$-CH_2CHR^3-R^2(CR^3=CH_2)_{x-1}$$

où
$R^2$ représente un radical hydrocarbure bivalent, trivalent ou tétravalent, avec 1 à 25 atomes de carbone par radical,
$R^3$ représente un atome d'hydrogène ou un radical alcoyle avec 1 à 6 atomes de carbone par radical, et
x représente 2, 3 ou 4, et

(c) par molécule, en moyenne au moins une unité, choisie dans le groupe des unités de fomules

$$O_{\frac{4-(c+1)}{2}}R_cSi-A^1-SiR_cO_{\frac{4-(c+1)}{2}} \quad (III),$$

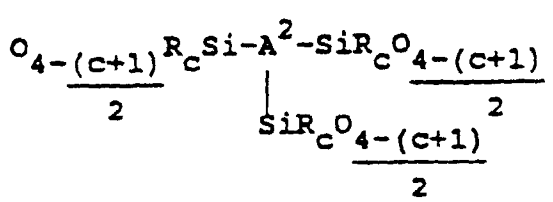
(IV)

et

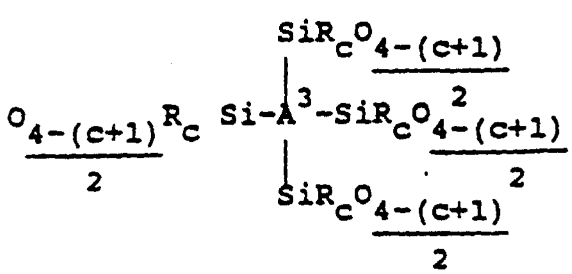
(V),

où
R et c ont les significations données précédemment,

$A^1$ représente un radical de formule

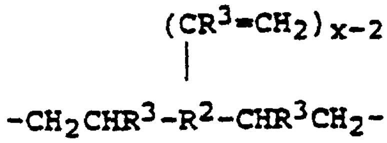

où
$R^2$, $R^3$ et x ont les significations données précédemment,
$A^2$ représente un radical de formule

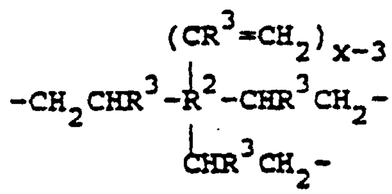
,

où
$R^2$, $R^3$ et x ont les significations données précédemment, avec la condition que $R^2$ n'est pas un radical hydrocarbure bivalent,
$A^3$ représente un radical de formule

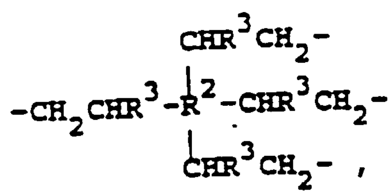

où
$R^2$ et $R^3$ ont les significations données précédemment, avec la condition que $R^2$ n'est pas un radical hydrocarbure bivalent ou trivalent,
avec la condition que les copolymères de siloxane ayant des groupes alcényle présentent une viscosité de au maximum 500 000 mPa·s à 25°C et présentent, en moyenne, au moins deux groupes alcényle par molécule, de formule

$$-CR^3=CH_2,$$

où
$R^3$ a la signification donnée précédemment, et avec la condition que les organopolysiloxanes linéaires constitués des unités récurrentes suivantes

$$-[CH_2]_{a'}-[R'_2SiO]_{b'}-R'_2Si-$$

où
R'est un groupe aliphatique saturé ou aromatique et chaque R' peut être identique ou différent,
a' représente 5 à 100, et
b' représente 1 à 1000,
et les organopolysiloxanes sur lesquels l'extrémité $-[CH_2]_{a'}-$ se termine par $-CH=CH_2$ ou hydrogène et l'extrémité $-R'_2Si-$ se termine par $-[CH_2]_{a'}-CH=CH_2$ ou hydrogène, où au moins un groupe $-CH=CH_2$ est présent, sont exclus, par réaction d'un composé organique (1) ayant au moins deux doubles liaisons aliphatiques, de

formule générale

$$R^2(CR^3=CH_2)_x,$$

où
$R^2$ représente un radical hydrocarbure bivalent, triva-lent ou tétravalent, avec 1 à 25 atomes de carbone par radical,
$R^3$ représente un atome d'hydrogène ou un radical alcoyle avec 1 à 6 atomes de carbone par radical, et
x représente 2, 3 ou 4,
avec un organopolysiloxane (2) avec en moyenne, plus d'un atome d'hydrogène à liaison Si par molécule, en présence d'un catalyseur (3) activant l'addition d'hydrogène à liaison Si sur une double liaison aliphatique, où le rapport introduit des doubles liaisons aliphatiques dans le composé organique (1) aux hydrogènes à liaison Si dans l'organopolysiloxane (2) atteint 1,5:1 à 20:1, avec la condition que la réaction d'un diène de formule

$$CH_2=CH-(CH_2)_{a'}-CH=CH_2$$

avec un organopolysiloxane de formule

$$HR'_2SiO-[R'_2SiO]_{b'}-SiR'_2H$$

où
R', a' et b' ont les significations données ci-dessus, en présence du catalyseur (3) est exclue.

**6.** Procédé suivant la revendication 5, caractérisé en ce que l'on utilise comme composé organique (1), le 1,2,4-trivinylcyclohexane.

**7.** Procédé suivant la revendication 5 ou 6, caractérisé en ce que l'on utilise comme organopolysiloxane (2), ceux de formule

$$H_dR_{3-d}SiO(SiR_2O)_o(SiRHO)_pSiR_{3-d}H_d \qquad (VII),$$

où

R représente des radicaux hydrocarbure identiques ou différents, facultativement halogénés, avec 1 à 18 atomes de carbone par radical,
d représente 0 ou 1;
o représente 0 ou un nombre entier de 1 à 1000, et
p représente un nombre entier de 1 à 6.

**8.** Procédé suivant la revendication 5, 6 ou 7, caractérisé en ce que le copolymère de siloxane ayant des groupes alcényle ainsi obtenu est équilibré avec un organopolysiloxane (4), choisi dans le groupe constitué des organopolysiloxanes linéaires, ayant des groupes triorganosiloxy terminaux, des organopolysiloxanes linéaires, ayant des groupes hydroxy terminaux, des organopolysiloxanes cycliques et des copolymères d'unités diorganosiloxane et monoorganosiloxane.